# EUROPÄISCHE PATENTSCHRIFT

(11) **EP 1 503 876 B1**
(45) Veröffentlichungstag und Bekanntmachung des Hinweises auf die Patenterteilung: **13.01.2010**
(21) Anmeldenummer: 03729983.1
(22) Anmeldetag: 06.05.2003
(51) Int. Cl.: B21H 7/12, B23P 9/02, A43B 23/10, A43B 7/32, A43D 8/00

(54) **VERFAHREN UND VORRICHTUNG ZUR HERSTELLUNG EINES EINSATZES F R SICHERHEITS- ODER SCHUTZSCHUHE UND EIN SOLCHER EINSATZ**
METHOD AND DEVICE FOR THE PRODUCTION OF AN INSERT FOR SAFETY SHOES OR PROTECTIVE SHOES, AND SUCH AN INSERT
PROCEDE ET DISPOSITIF DE PRODUCTION D'UN INSERT DESTINE A UNE CHAUSSURE DE SECURITE OU DE PROTECTION ET INSERT EN QUESTION

(30) Priorität: 06.05.2002 DE 10220174
(43) Veröffentlichungstag der Anmeldung: 09.02.2005
(73) Patentinhaber: Kemper, Kurt, 45481 Mühlheim (DE); Otto, Günter, 97645 Ostheim v.d. Rh. (DE)
(72) Erfinder: Kemper, Kurt, 45481 Mühlheim (DE); Otto, Günter, 97645 Ostheim v.d. Rh. (DE)
(74) Vertreter: Grape, Knut
(86) Internationale Anmeldenummer: PCT/EP2003/004737
(87) Internationale Veröffentlichungsnummer: WO 2003/092926

(56) Entgegenhaltungen:
- WO-A-00/16920
- DE-C- 19 623 361
- DE-U- 9 411 460
- GB-A- 1 070 342
- US-A- 2 151 554
- PATENT ABSTRACTS OF JAPAN vol. 1995, no. 11, 26. Dezember 1995 (1995-12-26) & JP 07 227302 A (NHK SPRING CO LTD), 29. August 1995 (1995-08-29)

## Beschreibung

Die Erfindung betrifft ein Verfahren und eine Vorrichtung zur Herstellung eines Einsatzes für Sicherheits- oder Schutzschuhe. Die Erfindung betrifft ebenfalls einen Einsatz nach dem Oberbegriff des Anspruchs 29.

Einsätze für Sicherheits- oder Schutzschuhe sind ebenso wie Verfahren und Vorrichtungen zu deren Herstellung allgemein bekannt. Derartige Einsätze bzw. Sicherheitsschuhe, wie beispielsweise auch in dem DE-GM 83 06 926.7 oder der DE 196 23 361 C1 beschrieben, umfassen ein etwa kappenförmiges Element mit einer Öffnung zur Aufnahme wenigstens eines Teils eines Fußes, insbesondere von Zehen, eines Menschen und eine sich an das etwa kappenförmige Element anschließende, an bzw. auf einer Sohle eines Sicherheits- oder Schutzschuhs abstützende Bördelung oder dergleichen Rand. Dabei erstreckt sich die an bzw. auf der Sohle des Sicherheits- oder Schutzschuhs abstützende Bördelung oder dergleichen Rand gegenüber der Wandung des etwa kappenförmigen Elementes in dem Übergangsbereich zwischen dem etwa kappenförmigen Element und der Bördelung oder dergleichen Rand in einem Winkel von etwa 90°. Allerdings sind solche Einsätze bisher in der Praxis lediglich aus Stahl oder einer Stahl enthaltenden Legierung ausgebildet. Aufgrund dessen weisen sämtliche dieser Einsätze ein im Verhältnis des Gesamtgewichtes solcher Sicherheits- oder Schutzschuhe hohes Eigengewicht auf. Zudem sind diese Einsätze in der Herstellung verhältnismäßig teuer, da oftmals Nachbearbeitungen, wie Härten, Tempern, Vergüten, Beizen, Polieren oder auch Galvanisieren bzw. sonstige Oberflächenbehandlung, erforderlich sind, um ausreichend hart, korrosionsbeständig oder auch mit dem Ledermaterial etc. solcher Sicherheits- oder Schutzschuhe verträglich bzw. dauerhaft verbindbar zu sein. Schließlich ist eine mit Stahl oder einer Stahl enthaltenden Legierung verbundene Magnetisierung; die ohne besondere und damit ebenfalls kostenintensive Vorkehrungen vorhanden ist, in solchen Sicherheits- oder Schutzschuhen zumeist unerwünscht.

Das Dokument US-A-2,151,554, ist der nächstliegender Stand der Technik für den Gegenstand der Ansprüche 1 und 16. Es offenbart ein Verfahren und eine Vorrichtung zur Herstellung von Einsätzen für Sicherheits- oder Schutzschuhe. Gemäß US-A-2,151,554 wird ein Rohling aus Stahl zu einem Zwischenrohling gewalzt und anschließend mittels Formwerkzeugen zu einem Einsatz spanlos geformt. Danach erfolgt das Härten und das Tempern des geformten Einsatzes. Das Dokument JP-A-7-227302 offenbart einen Einsatz nach dem Oberbegriff des Anspruchs 29.

Der vorliegenden Erfindung liegt daher die Aufgabe zugrunde, ein Verfahren und eine Vorrichtung zur Herstellung eines Einsatzes für Sicherheits- oder Schutzschuhe bereitzustellen und einen solchen Einsatz zur Verfügung stellen, mit welchem sich die obigen Nachteile verhindern lassen, welcher mithin ein ausgesprochen geringes Gewicht aufweist, eine einfache und kostengünstige Herstellung erlaubt, gleichzeitig von besonders hoher Härte und (Schlag-)Festigkeit sowie ohne magnetische Eigenschaften ist.

Diese Aufgabe wird auf überraschend einfache Weise in verfahrenstechnischer Hinsicht durch die Merkmale des Anspruchs 1 gelöst.

Durch die erfindungsgemäße Ausgestaltung des Verfahrens nach den Merkmalen des Anspruchs 1, bei welchem zur Herstellung von Einsätzen für Sicherheits- oder Schutzschuhe aus einem unprofilierten, wenigstens eine ebene Oberfläche aufweisenden Längsprofil aus Aluminium oder einer Aluminium enthaltenden Legierung das unprofilierte Längsprofil zunächst durch mindestens eine wenigstens teilweise mit einem Außenprofil versehene Walze zumindest teilweise beaufschlagt wird, derart, dass die behandelte Oberfläche des Längsprofils unter Druckeigenspannungen und die unter der behandelten Oberfläche liegenden Zonen des Längsprofils unter Zugeigenspannungen in axialer und tangentialer Richtung gesetzt werden, das unter Druck- und Zugeigenspannungen gesetzte Längsprofil dann zugeschnitten, spanlos geformt und mit einer Bördelung oder dergleichen Rand versehen wird sowie der Einsatz schließlich zumindest teilweise (nach-)verdichtet wird, lässt sich ein besonders einfaches Verfahren erhalten, um Einsätze für Sicherheit-und Schutzschuhe nicht zuletzt aufgrund einer rein spanlosen Bearbeitung ohne großen Arbeits- und Kostenaufwand herzustellen. Damit einhergehend erhalten die Einsätze eine besonders hohe Festigkeit und/oder Härte ebenso wie eine ausgesprochen hohe Genauigkeit und Glattheit. Mit dem erfindungsgemäßen Verfahren wird weiterhin eine Säuberung der Materialoberfläche und/oder der oberflächennahen Randzone von spröden Oxidkrusten, beispielsweise Aluminiumoxidkrusten, und schädlichen Verunreinigungen erreicht und Oberflächendefekte sowie Risse beseitigt. Eine gesonderte Bearbeitung der Materialoberfläche ist nicht erforderlich. Im Ergebnis sind die Einsätze mit einer materialidentischen Hülle von mehreren Hundert Mikrometern umgeben, die aufgrund einer erhöhten Materialfestigkeit und resultierenden Druckeigenspannung versteifend wirkt. Die Einsätze erhalten dabei eine Eigenspannungscharakteristik, nämlich Durckeigenspannungen in der plastisch verformten Oberfläche bzw. oberflächennahen Randzone und Zugeigenspannungen in den darunter liegenden Gebieten, welche einander entgegenwirken. Die aus dem Längsprofil hergestellten Einsätze erhalten mithin eine erheblich verbesserte Dauerfestigkeit.

Vorteilhafte konstruktive Einzelheiten des erfindungsgemäßen Verfahrens sind in den Ansprüchen 2 bis 15 beschrieben.

In besonders vorteilhafter Weise ist entsprechend den Merkmalen nach Anspruch 2 vorgesehen, dass das Längsprofil durch mindestens eine wenigstens teilweise mit einem Außenprofil versehene Walze, die im wesentlichen senkrecht oder in einem Winkel β zum Längsprofil angeordnet und um deren Längsachse drehbar ist, beaufschlagt wird.

Zur weiteren Erhöhung der Festigkeit und Härte sowie gleichzeitig der Genauigkeit wird das Längsprofil in besonderer Ausgestaltung der Erfindung nach Anspruch 3 durch mindestens zwei jeweils wenigstens teilweise mit einem Außenprofil versehene Walzen aufeinanderfolgend in entgegengesetzter Richtung beaufschlagt. Auf diese Weise wird die zu behandelnde Oberfläche des Längsprofils vorzugsweise quer zur Bewegungsrichtung des Längsprofils zuerst in einer Richtung und dann in dazu entgegengesetzter Richtung verformt. Zusätzlich wird das Längsprofil auf diese Weise gasdicht gemacht.

Zweckmäßigerweise wird das Längsprofil entsprechend den Maßnahmen nach Anspruch 4 durch die mindestens eine wenigstens teilweise mit einem Außenprofil versehene Walze beaufschlagt und durch mindestens eine weitere wenigstens teilweise mit einem Außenprofil versehene Walze oder eine unprofilierte Walze oder dergleichen Abstützeinrichtung, die zu der mindestens einen Walze gegenüberliegend beabstandet ist, bearbeitet bzw. abgestützt.

Eine vorteilhafte Ausgestaltung des erfindungsgemäßen Verfahrens besteht darin, die zu behandelnde Oberfläche des Längsprofils nach Anspruch 5 durch die mindestens eine Walze mit einem Außenprofil in Form von ringförmigen Wülsten und Ausnehmungen zu bearbeiten.

Weiterhin liegt es im Rahmen der Erfindung, die zu behandelnde Oberfläche des Längsprofils nach Anspruch 6 durch mehrere Walzen mit einem Außenprofil in Form der ringförmigen Wülste und Ausnehmungen zu bearbeiten, wobei die ringförmigen Wülste und Ausnehmungen von zueinander benachbarten Walzen in deren Ausgestaltung und Anordnung voneinander unterschiedlich sind und/oder die jeweils zueinander benachbarten Walzen in verschiedener Drehrichtung angetrieben werden.

Dabei ist nach Anspruch 7 erfindungsgemäß vorgesehen, dass das Längsprofil bzw. die zu behandelnde Fläche des Längsprofils durch Walzen mit einem Außenprofil in Form von zu den Längsachsen der Walzen in einem Winkel α bzw. α' angeordneten ringförmigen Wülsten und Ausnehmungen bearbeitet wird, wobei die Walzen bei im Wesentlichen entgegengesetzter Vorlaufstellung der Wülste und Ausnehmungen in gleicher Drehrichtung oder bei im Wesentlichen gleicher Vorlaufstellung der Wülste und Ausnehmungen in entgegengesetzter Drehrichtung angetrieben werden.

Alternativ oder kumulativ ist darüber hinaus erfindungsgemäß vorgesehen, dass das Längsprofil bzw. die zu behandelnde Fläche des Längsprofils nach Anspruch 8 durch Walzen mit einem Außenprofil in Form von zu deren Längsachsen senkrechten, insbesondere zueinander axial versetzten, ringförmigen Wülsten und Ausnehmungen bearbeitet wird.

Weiterhin liegt es gemäß der technischen Merkmale der Ansprüche 9 und 10 im Rahmen der Erfindung, dass das Längsprofil durch Ausstanzen zugeschnitten wird und dass der zugeschnittene Abschnitt des Längsprofils spanlos durch (Tief-)Ziehen zu einem etwa topfförmigen Profil geformt wird.

Von ganz besonderem Interesse sind die Merkmale der Ansprüche 11 und 12, wonach das unter Eigenspannungen gesetzte Längsprofil nach entsprechendem Zuschnitt und anschließender Formgebung in zwei, insbesondere zueinander spiegelsymmetrische, kappenförmige Elemente getrennt wird, die zwei, insbesondere zueinander spiegelsymmetrischen, kappenförmige Elemente jeweils mit einer Bördelung oder dergleichen Rand versehen und zusätzlich oberflächenseitig verdichtet werden, und zwar bis zu einer Oberflächentiefe von etwa 100 µm, insbesondere von etwa 1 bis 20 µm und vorzugsweise von etwa 1 µm. Hierdurch kann die bereits durch die Eigenspannungserzeugung erhaltene hohe Festigkeit des Längsprofils und damit einhergehend der aus dem Längsprofil herzustellenden Einsätze selbst noch weiter erhöht werden.

Die Trennung des etwa topfförmigen Profils und die Abkantung sowie Verdichtung der zwei, insbesondere zueinander spiegelsymmetrischen, kappenförmigen Elemente nach Anspruch 13 alternativ zeitgleich oder in zeitlicher Abfolge zueinander vorgenommen werden. Eine zeitgleiche Bearbeitung hat den wesentlichen Vorteil einer hohen Wirtschaftlichkeit.

In ganz vorteilhafter Ausgestaltung des erfindungsgemäßen Verfahrens werden die zwei kappenförmigen Elementen zusammen mit der Bördelung oder dergleichen Rand entsprechend den Maßnahmen des Anspruchs 14 noch zusätzlich gerichtet und/oder durch Druckbeaufschlagung (nach-)verdichtet.

In diesem Zusammenhang liegt es vorzugsweise im Rahmen der Erfindung, dass die zwei kappenförmigen Elementen zusammen mit der Bördelung oder dergleichen Rand nach Anspruch 15 zu zwei Einsätzen auf Feinmaß gebracht und anschließend gegebenenfalls flächenverdichtet werden.

Diese Aufgabe wird weiterhin in vorrichtungstechnischer Hinsicht auf überraschend einfache Weise durch die Merkmale des Anspruchs 16 gelöst.

Demnach umfasst die Vorrichtung nach der Erfindung zur Herstellung von Einsätzen für Sicherheits- oder Schutzschuhe aus einem unprofilierten, wenigstens eine ebene Oberfläche aufweisenden Längsprofil aus Aluminium oder einer Aluminium enthaltenden Legierung, zur Durchführung des Verfahrens nach einem der vorhergehenden Ansprüche, die eine Einrichtung zur Erzeugung von Eigenspannungen in dem unprofilierten Längsprofil mit mindestens einer im Wesentlichen senkrecht oder unter einem Winkel zur Längsrichtung des Längsprofils angeordneten Walze, welche wenigstens teilweise mit einem die Oberfläche des Längsprofils beaufschlagenden Außenprofil in Form von zu der Längsachse der mindestens einen Walze in einem Winkel oder senkrecht angeordneten ringförmigen Wülsten und Ausnehmungen versehen und um deren Längsachse drehbar sind, eine Einrichtung zum Zuschneiden des unter Druck- und Zugeigenspannungen gesetzten Längsprofils, eine Einrichtung zur spanlosen Formgebung eines kappenförmigen Elementes und Ausbildung einer Bördelung oder dergleichen Rand an dem kappenförmigen Element sowie eine Einrichtung zur Verdichtung des Einsatzes umfasst. Die erfindungsgemäße Vorrichtung zeichnet sich somit durch eine besonders einfache und kompakte Konstruktion insgesamt aus. Die erfindungsgemäße Vorrichtung stellt zudem eine ausgesprochen hohe Fertigungsgenauigkeit bei der Herstellung von Einsätzen aus Aluminium oder einer Aluminium enthaltenden Legierung mit besonders hoher Festigkeit und Härte sowie großer Genauigkeit sicher. Nicht zuletzt aufgrund einer spanlosen Bearbeitung ermöglicht die erfindungsgemäße Vorrichtung eine wesentliche Verminderung des Arbeits- und Kostenaufwandes bei der Herstellung solcher Eisätze.

Vorteilhafte konstruktive Einzelheiten der erfindungsgemäßen Vorrichtung sind in den Ansprüchen 17 bis 28 beschrieben.

Von großer Bedeutung für eine Eigenspannungserzeugung in Längsprofilen sind die Merkmale der Ansprüche 18 bis 20, wonach die Einrichtung zur Eigenspannungserzeugung mindestens eine Walze, insbesondere zwei oder mehr, Walzen mit einem das Längsprofil beaufschlagenden Außenprofil aufweist. Demnach ist in vorteilhafter Weise eine Beaufschlagung des Längsprofils durch das Außenprofil der mindestens einen, insbesondere zwei oder mehr, Walzen aufeinanderfolgend in entgegengesetzter Richtung, d.h. eine zweifache Verformung im Wesentlichen etwa quer oder auch schräg zur Bewegungsrichtung des Längsprofils, ermöglicht.

Zweckmäßigerweise ist nach Anspruch 21 eine Schneideeinrichtung oder dergleichen zur Ablängung bzw. Abscherung des Längsprofils vorgesehen.

Von besonders großem Interesse sind zudem die technischen Merkmale der Ansprüche 25 und 27 bzw. 28, wonach Einrichtungen zur ergänzenden (Nach- bzw. Flächen-)Verdichtung der Oberfläche des unter Eigenspannungen gesetzten Längsprofils bzw. des daraus resultierenden Einsatzes nachgeordnet ist. Durch solche Einrichtungen kann die ohnehin bereits durch die Eigenspannungserzeugung erhaltene hohe Festigkeit noch weiter erhöht werden.

Dem Werkstoff Aluminium bzw. Aluminium enthaltenden Legierungen erschließen sich durch das Verfahren und/oder die Vorrichtung nach der Erfindung aufgrund einer erheblich gesteigerten Festigkeit und Härte, einer verbesserten Dauerfestigkeit, einer nur mehr geringen Toleranzgröße und hohen Glattheit sowie einer verbesserten Haftung für galvanische Beschichtungen oder sonstige korrosions- und oxidierungsverhindernde Materialien bisher nicht zugängliche Anwendungsmöglichkeiten. Dadurch wird zugleich die Vielseitigkeit des Werkstoffes Aluminium bzw. der Aluminium enthaltenden Legierung/en und deren bereits seit langem bekannten Vorteile noch weiter verbessert.

Diese Aufgabe wird schließlich noch auf überraschend einfache Weise in gegenständlicher Hinsicht durch die Merkmale des Anspruchs 29 gelöst.

Demnach lässt sich durch die Ausgestaltung des erfindungsgemäßen Einsatzes für Sicherheits- oder Schutzschuhe, der ein etwa kappenförmiges Element mit einer Öffnung zur Aufnahme wenigstens eines Teils eines Fußes, insbesondere von Zehen, eines Menschen und eine sich an das etwa kappenförmige Element anschließende, an bzw. auf einer Sohle eines Sicherheits- oder Schutzschuhs abstützende Bördelung oder dergleichen Rand umfasst, wobei sich die an bzw. auf der Sohle des Sicherheits- oder Schutzschuhs abstützende Bördelung oder dergleichen Rand gegenüber der Wandung des etwa kappenförmigen Elementes in dem Übergangsbereich zwischen dem etwa kappenförmigen Element und der Bördelung oder dergleichen Rand in einem Winkel von etwa 90° erstreckt, wobei das etwa kappenförmige Element und die sich an bzw. auf der Sohle des Sicherheits- oder Schutzschuhs abstützende Bördelung oder dergleichen Rand aus Aluminium oder einer Aluminium enthaltenden Legierung ausgebildet sind und wobei deren Oberflächen unter Druckeigenspannungen und die unter deren Oberflächen liegenden Zonen unter Zugeigenspannungen in axialer und tangentialer Richtung stehen, ein Einsatz mit besonders geringem (Eigen-)Gewicht erreichen. Durch die besondere Materialauswahl ist ermöglicht, das spezifische Gewicht des Einsatzes wesentlich zu reduzieren, so dass der Sicherheits- oder Schutzschuh insgesamt kaum schwerer ist als ein damit vergleichbarer Alltagsschuh. Gleichzeitig ist jedoch eine besonders hohe Härte und (Schlag- bzw. Stoß-)Festigkeit des Einsatzes nach der Erfindung wegen der künstlich induzierten Eigenspannungen, und zwar sowohl Druck- als auch Zugeigenspannungen, sichergestellt. Weiterhin ist eine einfache und kostengünstige Herstellung möglich, da viele, zudem oftmals zeit- und personalintensive Nachbearbeitungen nicht mehr erforderlich sind. Schließlich ist auf diese Weise auch ausgeschlossen, dass der erfindungsgemäße Einsatz magnetische Eigenschaften aufweist.

Vorteilhafte konstruktive Einzelheiten des erfindungsgemäßen Einsatzes sind in den Ansprüchen 30 bis 39 beschrieben.

Entsprechend den Merkmalen des Anspruchs 30 ist erfindungsgemäß vorgesehen, dass die sich an bzw. auf der Sohle des Sicherheits- oder Schutzschuhs abstützende Bördelung oder dergleichen Rand gegenüber der Wandung des etwa kappenförmigen Elementes in einem Winkel von etwa 90° nach innen umgebogen ist. Hierdurch wird eine weiter erhöhte Steifigkeit erreicht, obschon eine (Um-)Biegung der Bördelung oder dergleichen Rand konstruktiv ebenso nach außen denkbar wäre.

Von besonderem Interesse sind die Merkmale des Anspruchs 31, wonach der Übergangsbereich zwischen dem etwa kappenförmigen Element und der Bördelung oder dergleichen Rand eine Krümmung, insbesondere Biegekrümmung, aufweist, die ausgehend von einem Ende (Punkt A) der Bördelung oder dergleichen Rand auf der einen Seite der Öffnung des etwa kappenförmigen Elementes hin zu dem vorderen Ende (Punkt bzw. Scheitelpunkt S) des etwa kappenförmigen Elementes zunimmt und ausgehend von dem vorderen Ende (Punkt bzw. Scheitelpunkt S) des etwa kappenförmigen Elementes hin zu dem anderen Ende (Punkt B) der Bördelung oder dergleichen Rand auf der anderen Seite der Öffnung des etwa kappenförmigen Elementes abnimmt, und umgekehrt. Auf diese Weise lassen sich die Härte und (Schlag- bzw. Stoß-)Festigkeit des Einsatzes nach der Erfindung weiter erhöhen. Auch lässt sich hierdurch die Haltekraft vergrößern.

Entsprechend der Maßnahmen nach Anspruch 32 hat es sich dabei als besonders vorteilhaft erwiesen, dass die Zunahme der Krümmung, insbesondere Biegekrümmung, ausgehend von dem einen Ende (Punkt A) der Bördelung oder dergleichen Rand auf der einen Seite der Öffnung des etwa kappenförmigen Elementes hin zu dem vorderen Ende (Punkt bzw. Scheitelpunkt S) des etwa kappenförmigen Elementes und die Abnahme der Krümmung, insbesondere Biegekrümmung, ausgehend von dem vorderen Ende (Punkt bzw. Scheitelpunkt S) des etwa kappenförmigen Elementes hin zu dem anderen Ende (Punkt B) der Bördelung oder dergleichen Rand auf der anderen Seite der Öffnung des etwa kappenförmigen Elementes, und umgekehrt, im Wesentlichen kontinuierlich ist.

In diesem Zusammenhang haben sich die Merkmale des Anspruchs 33 in der Praxis als ausgesprochen vorteilhaft herausgestellt. Danach weist der Übergangsbereich zwischen dem etwa kappenförmigen Element und der Bördelung oder dergleichen Rand einen Radius, insbesondere Biegeradius, auf, der an dem einen bzw. anderen Ende (Punkt A, Punkt B) des etwa kappenförmigen Elementes zwischen 0,1 mm und 5 mm, insbesondere etwa 2 mm, vorzugsweise genau 1 mm, und an dem vorderen Ende (Punkt S) des etwa kappenförmigen Elementes zwischen 1 mm und 14 mm, insbesondere etwa 4 mm, vorzugsweise genau 3 mm, beträgt.

Die Merkmale des Anspruchs 34, die Kanten wenigstens der sich an bzw. auf der Sohle des Sicherheits- oder Schutzschuhs abstützenden Bördelung oder dergleichen Rand oberflächenseitig zu verdichten, dienen der weiteren Erhöhung der Stabilität des erfindungsgemäßen Einsatzes. Demnach ist eine Außenrissigkeit des Einsatzes durch Rundverdichtung vermieden.

Zur weitergehenden Erhöhung der Sicherheit bzw. des Schutzes eines menschlichen Fußes dienen die Merkmale des Anspruchs 35, wonach der sich an bzw. auf der Sohle des Sicherheits- oder Schutzschuhs abstützenden Bördelung oder dergleichen Rand eine durchtrittsichere Einlage zugeordnet ist. Diese Einlage besteht aus Aluminium oder einer Aluminium enthaltenden Legierung, deren Oberflächen unter Druckeigenspannungen und die unter deren Oberflächen liegenden Zonen unter Zugeigenspannungen in axialer und tangentialer Richtung gesetzt sind. Einerseits ist eine ausreichend hohe Härte und/oder Durchtrittsicherheit gewährleistet. Andererseits ist mit der Ausbildung einer solchen Einlage aus Aluminium oder einer Aluminium enthaltenden Legierung ein geringes Gewicht impliziert.

Des Weiteren liegt es im Rahmen der Erfindung, die durchtrittsichere Einlage nach Anspruch 36 gewellt auszubilden, derart, dass die Welligkeit etwa senkrecht zur Längsachse des etwa kappenförmigen Elementes verläuft. Zum einen wird auf diese Weise eine Federspannung erzeugt, die nicht zuletzt die Festigkeit der Einlage verbessert. Zum anderen eignet sich eine solche Welligkeit besonders, um eine verbesserte Klebfähigkeit der Einlage an der Sohle aus zum Beispiel Leder oder Kunststoff und damit eine erhöhte Haftfestigkeit zu erreichen. Bisherige zusätzliche Maßnahmen, wie beispielsweise ein Sandstrahlen der Einlage, sind somit nicht mehr erforderlich.

Weiterhin ist erfindungsgemäß vorgesehen, dass die dem etwa kappenförmigen Element zugewandte Oberfläche und/oder die abgewandte Unterfläche der gewellt ausgebildeten durchtrittsicheren Einlage nach Anspruch 37 durch eine korrespondierend ausgeformte Schicht oder Füllmasse, gegebenenfalls eines Teils der Sohle, ebenflächig ausgeformt ist.

Das etwa kappenförmige Element und/oder die durchtrittsichere Einlage, die unter Eigenspannungen gesetzt sind, können abhängig von den jeweilig zu erreichenden Materialeigenschaften bzw. -vorgaben nach Anspruch 38 in besonders vorteilhafter Weise aus zum Beispiel AlMg_{4,5}Mn, AlMgSi_{0,5}, AlMgSi, AlMg₅, AlZn_{4,5}Mg, AlCuMg, AlCuMg₂, AlZnMgCu_{0,5}, AlZnMgCu_{1,5}, AlCuMgPb als Aluminium enthaltende Legierung bestehen.

Schließlich liegt es noch im Rahmen der Erfindung nach Anspruch 39, dass das etwa kappenförmige Element und/oder die Bördelung oder dergleichen Rand und/oder die durchtrittsichere Einlage mit einem Überzug aus nicht-leitendem, stromisolierendem Material, insbesondere aus Hart-Cot®, und/oder aus Kunststoff und/oder Farbe bzw. Lack beschichtet ist/sind. Auf diese Weise ist sichergestellt, dass der erfindungsgemäße Einsatz stromisoliert und vollkommen unleitfähig ist.

In zweckmäßiger Weise eignet sich der erfindungsgemäße Einsatz zur Verwendung in Sicherheits- oder Schutzschuhen, die als Halbschuhe oder niedrige, halbhohe und hohe sowie oberschenkelhohe Stiefel ausgebildet sind.

Hierbei zeigen:
- Fig. 1: eine schematische Darstellung einer Ausführungsform einer erfindungsgemäß ausgebildeten Vorrichtung zur Herstellung eines Einsatzes für Sicherheits- oder Schutzschuhe,
- Fig. 2A und 2B: schematische Seiten- und Vorderansicht einer Ausführungsform einer erfindungsgemäß ausge- bildeten Einrichtung zur Eigenspannungserzeugung in einem teilweise geschnittenen Längsprofil mit we- nigstens einer ebenen Oberfläche, beispielsweise einem Blech,
- Fig. 3A und 3B: schematische Drauf- und Seitenansicht auf die Walzen der Ausführungsform der erfindungsgemäß ausgebildeten Einrichtung entsprechend Ausschnitt III in der Fig. 2A,
- Fig. 4: schematische Drauf- und Seitenansicht auf die Wal- zen der Ausführungsform der erfindungsgemäß ausge- bildeten Einrichtung entsprechend Ausschnitt III in der Fig. 2A,
- Fig. 5A und 5B: eine teilweise geschnittene Vorderansicht auf die erfindungsgemäße Einrichtung nach der Fig. 2B und eine schematische Draufsicht auf drei Walzen der erfindungsgemäßen Einrichtung, jeweils in ver- größerter Darstellung,
- Fig. 6A, 6B und 6C: schematische Vordersichten auf wei- tere Ausführungsformen von Walzen der erfindungsge- mäßen Einrichtung, jeweils in vergrößerter Darstel- lung,
- Fig. 7: eine schematische, teilweise geschnittene Seitenan- sicht einer Ausführungsform einer erfindungsgemäß ausgebildeten Einrichtung zur spanlosen Formgebung von zwei kappenförmigen Elementen und zur Ausbil- dung einer Bördelung oder dergleichen Rand, jeweils nach der Erfindung, mir zwei kappenförmigen Elemen- ten,
- Fig. 8: eine schematische, teilweise geschnittene Vorderan- sicht einer Ausführungsform einer erfindungsgemäß ausgebildeten Einrichtung zur Verdichtung des er- findungsgemäßen Einsatzes, mit einem kappenförmigen Element,
- Fig. 9: eine schematische, teilweise geschnittene Seitenan- sicht einer Ausführungsform einer erfindungsgemäß ausgebildeten Einrichtung zur Feinbemaßung und Nachverdichtung von zwei kappenförmigen Elementen und einer entsprechenden Bördelung oder dergleichen Rand, jeweils nach der Erfindung, mit zwei Einsät- zen nach der Erfindung,
- Fig. 10: eine schematische, teilweise abgebrochene Längs- querschnittsansicht durch eine Ausführungsform ei- nes erfindungsgemäß ausgebildeten Sicherheits- oder Schutzschuhs mit einem Einsatz nach der Erfindung,
- Fig. 11: eine teilweise geschnittene Draufsicht auf den er- findungsgemäß ausgebildeten Sicherheits- oder Schutzschuh mit einem Einsatz nach der Erfindung entsprechend der Linie XI-XI in der Fig. 10,
- Fig. 12: eine Querschnittsansicht durch den erfindungsgemäß ausgebildeten Sicherheits- oder Schutzschuh mit ei- nem Einsatz nach der Erfindung entsprechend der Li- nie XII-XII in der Fig. 11,
- Fig. 13: eine schematische perspektivische Rückansicht eines erfindungsgemäß ausgebildeten Einsatzes für Sicher- heits- oder Schutzschuhe,
- Fig. 14: eine schematische Draufsicht auf die Ausführungs- form des erfindungsgemäßen Einsatzes nach der Fig. 13,
- Fig. 15: eine schematische Rückansicht auf die Ausführungs- form des erfindungsgemäßen Einsatzes der Fig. 13 gemäß Pfeil XV in der Fig. 14, und
- Fig. 16: eine schematische Querschnittsansicht durch eine Ausführungsform des erfindungsgemäß ausgebildeten etwa kappenförmigen Elementes nach der Erfindung längs der Linie XVI-XVI in der Fig. 14.

Bei der nachfolgenden Beschreibung einer erfindungsgemäßen Vorrichtung 10 zur Herstellung von Einsätzen 12 für Sicherheits- oder Schutzschuhe 14 aus einem unprofilierten Längsprofil 16, das aus Aluminium oder einer Aluminium enthaltenden Legierung gebildet ist, sind einander entsprechende, gleiche Bauteile jeweils mit identischen Bezugsziffern versehen.

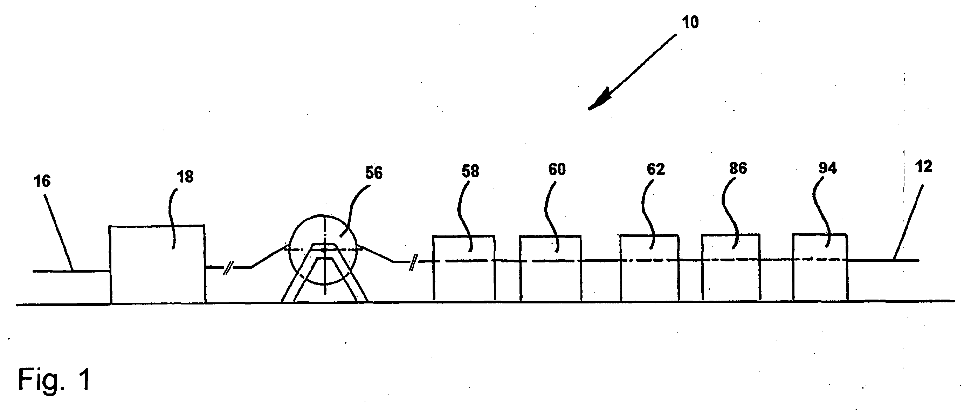

In der Fig. 1 ist schematisch eine Ausführungsform einer erfindungsgemäßen Vorrichtung 10 zur Herstellung von Einsätzen 12 für Sicherheits- oder Schutzschuhe 14 aus einem unprofilierten Längsprofil 16 mit wenigstens einer ebenen Oberfläche 16' gezeigt. Bei dem dargestellten Ausführungsbeispiel handelt es sich um ein Längsprofil 16 mit quadratischem oder - wie hier gezeigt - rechteckigem oder sonstigem polygonalen Querschnitt, wie zum Beispiel ein Blech, dessen obere und untere Oberfläche 16' und gegebenenfalls die Kantenbereiche gleichermaßen bearbeitet werden.

Zum besseren Verständnis werden anhand der Fig. 1 sämtliche dargestellten Einrichtungen der erfindungsgemäßen Vorrichtung 10 bzw. die damit zusammengehörigen Verfahrensschritte erläutert, obschon für das Verfahren und/oder die Vorrichtung 10 nach der Erfindung nur ein Teil dessen notwendig ist.

Das unprofilierte Längsprofil 16 wird zunächst einer Einrichtung 18 zur Erzeugung von Eigenspannungen in dem Längsprofil 16 zugeführt. Durch die Eigenspannungserzeugungseinrichtung 18 erhält das Längsprofil eine wesentlich erhöhte Festigkeit.

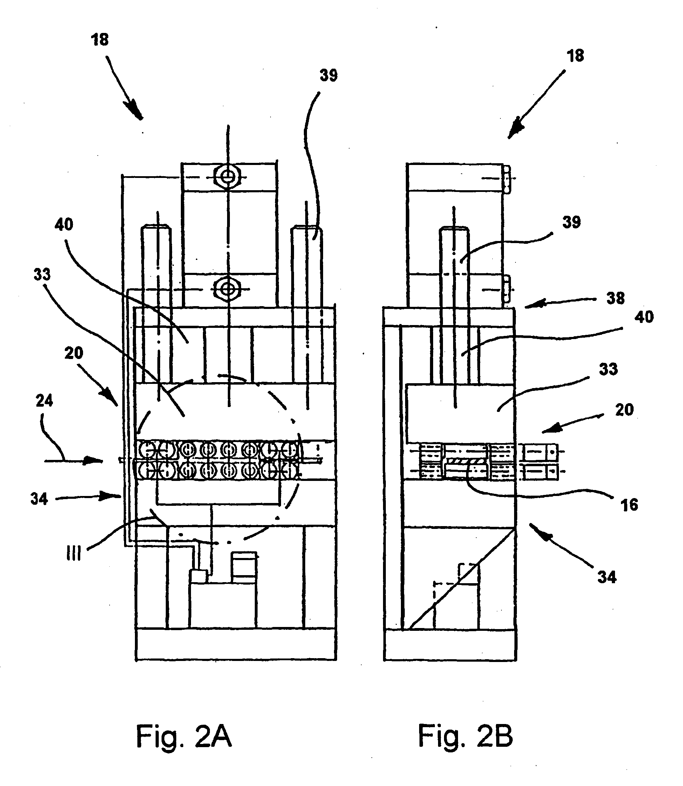

Die Eigenspannungserzeugungseinrichtung ist bei dem Ausführungsbeispiel nach den Fig. 2A und 2B als Presse oder dergleichen Vorrichtung ausgestaltet. Die Vorrichtung 10 umfasst eine Aufnahmeeinrichtung 20, in der insgesamt vier Paare von Walzen 22, 22', 22'', 22''' vorgesehen sind, die in Bewegungsrichtung des Längsprofils 16 gemäß Pfeil 24 hintereinander angeordnet und wenigstens teilweise mit einem die Oberfläche 16' des Längsprofils 16 beaufschlagenden Außenprofil 26, 26', 28, 28' versehen sind, welche nachfolgend noch im Einzelnen beschrieben werden.

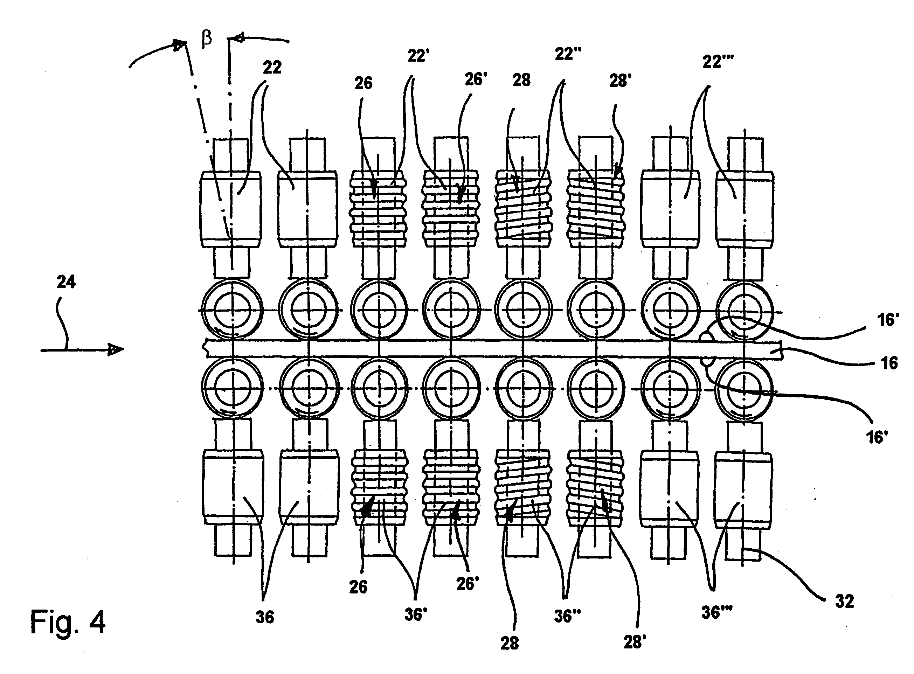

Die Walzen 22, 22', 22'', 22''' sind in einem Halterahmen 30 um deren Längsachsen 32 drehbar angeordnet, der mit einem Kopf 33 der Aufnahmeeinrichtung 20 verbunden ist. Wie die Fig. 4 zeigt, sind die Walzen 22, 22', 22'', 22''' senkrecht zur Bewegungsrichtung des Längsprofils 16 gemäß Pfeil 24 angeordnet. Es ist jedoch möglich, diese in einem Winkel β schräg dazu anzustellen (nicht gezeigt). Der Winkel β beträgt bei dem dargestellten Ausführungsbeispiel daher 0°.

Die Aufnahmeeinrichtung 20 wirkt mit einer Abstützeinrichtung 34 zusammen, welche der Aufnahmeeinrichtung 20 gegenüberliegend zugeordnet und als sogenanntes Gegenlager für das Längsprofil 16 bei der Eigenspannungserzeugung vorgesehen ist. Die Abstützeinrichtung 34 ist bei dem dargestellten Ausführungsbeispiel ebenfalls durch insgesamt vier Paare von Walzen 36, 36', 36'', 36''' gebildet, die in Zahl und Anordnung den vier Paaren von Walzen 22, 22', 22'', 22''' entsprechen. Die Walzen 36, 36', 36'', 36''' sind daher ebenfalls in Bewegungsrichtung des Längsprofils 16 gemäß Pfeil 24 hintereinander angeordnet und wenigstens teilweise mit einem die Oberfläche 16' des Längsprofils 16 beaufschlagenden Außenprofil 26, 26', 28, 28' versehen.

Sofern eine Behandlung der unteren Oberfläche 16' des Längsprofils 16 allerdings nicht erforderlich ist, ist es selbstverständlich, dass anstelle der Walzen 36', 36" mit einem Außenprofil 26, 26', 28, 28' ebenfalls unprofilierte Walzen 36, 36''', eingesetzt werden. Auch ist es denkbar, die Abstützeinrichtung 34 nicht mit den Walzen 36, 36', 36'', 36''' auszugestalten, sondern statt dessen zum Beispiel eine Abstützplatte oder dergleichen vorzusehen.

Die Aufnahmeeinrichtung 20 ist gegenüber der das Längsprofil 16 abstützenden Abstützeinrichtung 34 relativ bewegbar. Auf diese Weise ist sichergestellt, dass Längsprofile 16 beliebiger Dicke oberflächenbehandelt werden können.

Zu diesem Zweck ist die Aufnahmeeinrichtung 20 über eine Führungseinrichtung 38, beispielsweise in Form von Führungsstangen 39 oder dergleichen, und ein mechanisch, elektrisch, pneumatisch oder hydraulisch betätigbares Antriebselement 40 gegenüber der Abstützeinrichtung 34 relativ bewegbar, d.h. höhenverstellbar. Das betätigbare Antriebselement 40 ist vorzugsweise als Druckzylinder ausgebildet.

Die Aufnahmeeinrichtung 20 und/oder die Abstützeinrichtung 34 ist/sind hydraulisch oder pneumatisch steuerbar. Die Paare von Walzen 22, 22''' bzw. 36, 36''', die jeweils eine glatte Oberfläche aufweisen, sind mittels gesonderter Antriebsmotoren 42 um deren Längsachsen 32 drehbar angetrieben. Die Antriebsmotoren 42 sind dabei auch vorzugsweise als Hydraulik- bzw. Pneumatikmotoren ausgebildet. Auf diese Weise lässt sich der Vorschub des Längsprofils 16 beliebig, gleichzeitig aber exakt und vor allem stufenlos einstellen. Die Walzen 22', 22" bzw. 36', 36" sind demgegenüber in dem Halterahmen 30 der Aufnahmeeinrichtung 20 lediglich frei drehbar gelagert.

Wenn auch bei dem in den Fig. 2A bis 3B gezeigten Ausführungsbeispiel der Eigenspannungserzeugungseinrichtung 18 lediglich die Walzen 22, 22''', 36, 36''' über Antriebsmotoren 42 in Drehung versetzt werden, so ist es durchaus denkbar, alternativ oder kumulativ einzelne oder sämtliche Walzen 22', 22'' und/oder 36', 36'' mit Außenprofil 26, 26', 28, 28' über derartige Antriebsmotoren mit einer Drehbewegung zu beaufschlagen. Hierdurch kann der Vorschub des Längsprofils 16 noch zusätzlich unterstützt werden.

Je nach individueller Vorgabe bzw. Anforderung an die Festigkeit und/oder Maßgenauigkeit des Längsprofils 16 kann diese beispielhaft beschriebene Ausführungsform der Spannungserzeugungseinrichtung 18 nach der Erfindung beliebig variiert werden. So es ist ohne weiteres möglich, die obere und/oder untere Oberfläche 16' des Längsprofils 16 lediglich durch eine einzige Walze 22', 22'' bzw. 36', 36'' zu bearbeiten, die ein wenigstens teilweise mit einem die Oberfläche 16' des Längsprofils 16 beaufschlagendes Außenprofil 26, 26', 28, 28' besitzt. Gleichfalls ist es denkbar, die Anzahl der Walzen 22', 22'' bzw. 36', 36'' mit Außenprofil 26, 26', 28, 28' beliebig zu erhöhen.

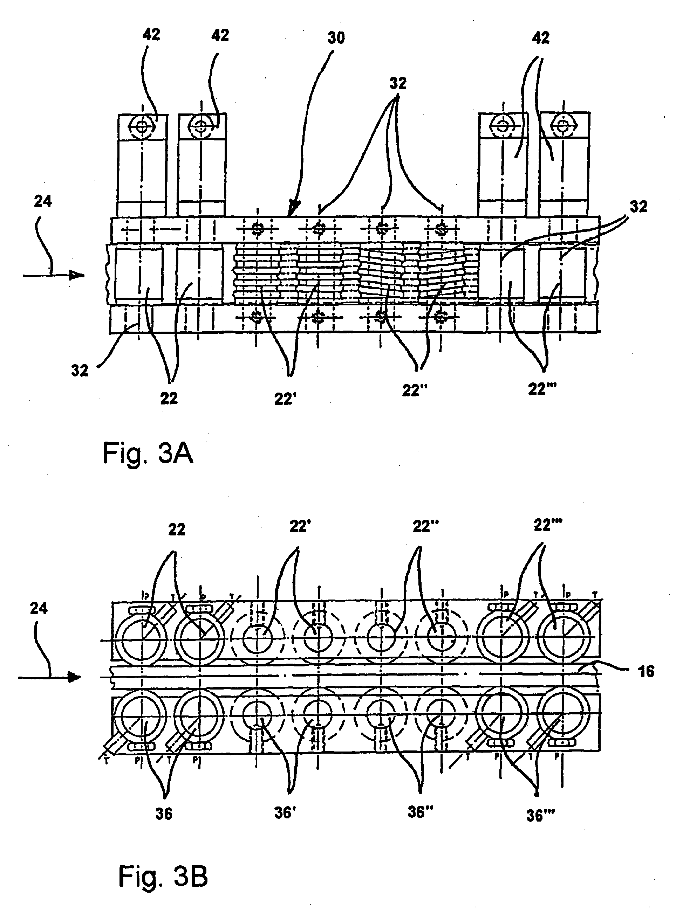

Wie sich den Fig. 3A, 4, 5A, 5B, 6A und 6B deutlich entnehmen lässt, weisen die Walzen 22', 22'', 36', 36'' wenigstens teilweise ein die Oberfläche 16' des Längsprofils 16 beaufschlagendes Außenprofil 26, 26', 28, 28' in Form von ringförmigen Wülsten 44 und Ausnehmungen 46 auf. Die Außenprofile 26, 26' bzw. 28, 28' sind dabei jeweils aufeinander abgestimmt.

Bei den Walzen 22', 36' sind die ringförmigen Wülste 44 und Ausnehmungen 46 zu den Längsachsen 32 der Walzen 22', 36' senkrecht angeordnet. Mithin sind die ringförmigen Wülste 44 und Ausnehmungen 46 der Walzen 22', 36' parallel in Bewegungsrichtung des Längsprofils 16 gemäß Pfeil 24 ausgerichtet.

Bei den Walzen 22'', 36" sind die Wülste 44 und Ausnehmungen 46 demgegenüber zu den Längsachsen 32 der Walzen 22", 36'' in einem Winkel α bzw. α' angeordnet. Mithin sind die Wülste 44 und Ausnehmungen 46 mit einer Steigung versehen bzw. schräg zur Bewegungsrichtung des Längsprofils 16 gemäß Pfeil 24 ausgerichtet.

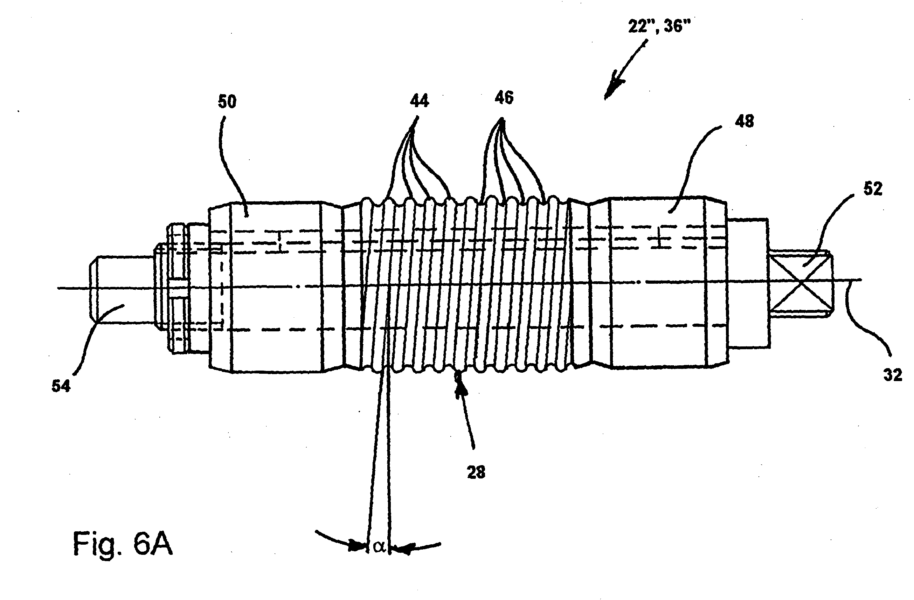

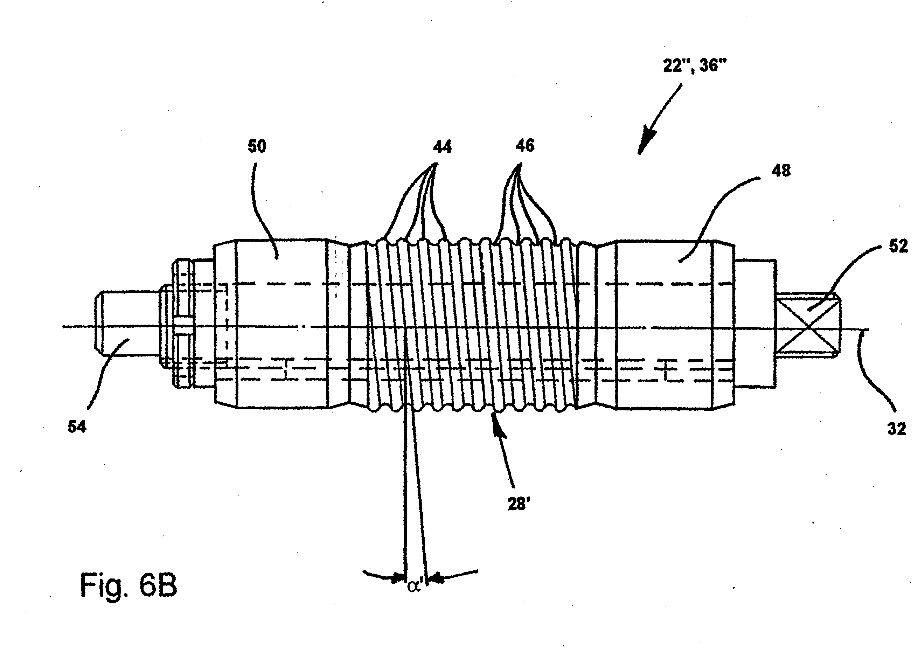

Aus den Fig. 6A und 6B geht hervor, dass die Wülste 26 und Ausnehmungen 24 des Außenprofils 28, 28' zueinander umgekehrt, d.h. etwa kreuzweise, angeordnet. Obschon der Winkel α des Außenprofils 28 der Walze 22", 36'' nach der Fig. 6A zu dem Winkel α' des Außenprofils 28' der Walze 22'', 36'' nach der Fig. 6B betragsmäßig identisch ist, unterscheiden sich die Winkel α bzw. α' demnach in ihrem Vorzeichen, sind mithin einmal positiv und einmal negativ, oder umgekehrt. Der Winkel α, α' liegt dabei in einem Bereich zwischen 2° und 85°, vorzugsweise zwischen 2° und 60° und ganz besonders bevorzugt zwischen 2° und 10° einschließlich.

Es ist allerdings dazu alternativ oder kumulativ möglich, dass sich die Winkel α, α' der Steigung der ringförmigen Wülste 44 und Ausnehmungen 46 voneinander betragsmäßig unterscheiden, dass zum Beispiel der Winkel α 30° und der Winkel α' 45° betragen. Auch jede andere Kombination kann vorgesehen sein.

Die Walzen 22'', 36'' weisen jeweils zwei Enden 48, 50 auf, welche das jeweilige Außenprofil 28, 28' begrenzen. Das Ende 48 der Walzen 22", 36'' ist entsprechend den Fig. 6A und 6B mit einem Profil 52, beispielsweise einem Vierkantprofil, in einer entsprechend geformten, im Wesentlichen passgenauen Ausnehmung einer (nicht gezeigten) Antriebseinrichtung drehfest aufgenommen. Das Ende 50 der Walzen 22'', 36'' ist hingegen jeweils über einen Zapfen 54 in Ausnehmungen einer (ebenfalls nicht gezeigten) Tragkonstruktion drehbar aufgenommen.

Die Antriebseinrichtung der Walzen 22'', 36'' ist/sind bei der Ausführungsform der Eigenspannungserzeugungseinrichtung 18 nach der Erfindung vorzugsweise hydraulisch oder pneumatisch steuerbar. Ein solcher Antrieb der Walzen 22'', 36'' ermöglicht eine stufenlose Steuerung, um jeglichen Schlupf zu vermeiden und somit eine ständig glatte Oberfläche 16 des Längsprofils 16 bei dessen Behandlung zu erhalten.

Vorzugsweise sind die Walzen 22', 36' bzw. 22'', 36'' mit dem Außenprofil 26, 26', 28, 28' in Bewegungsrichtung des Längsprofils 16 gemäß Pfeil 24 paarweise hintereinander angeordnet, derart, dass die Oberfläche 16' des Längsprofils 16 aufeinanderfolgend in entgegengesetzter Richtung beaufschlagt wird. Die Oberfläche 16' des Längsprofils 16 wird mithin etwa quer zur Bewegungsrichtung des Längsprofils 16 gemäß Pfeil 24 einmal hin und dann in entgegengesetzter Richtung wieder zurück verformt.

Dies kann bei den zwei einander nachgeordneten Walzen 22' bzw. 36' mit zu deren Längsachsen 32 senkrecht angeordneten ringförmigen Wülste 44 und Ausnehmungen 46 dadurch erfolgen, dass die zwei Walzen 22' bzw. 36' und/oder die ringförmigen Wülste 44 und Ausnehmungen 46 zueinander axial versetzt sind.

Bei den zwei einander nachgeordneten Walzen 22'' bzw. 36'' mit den zu deren Längsachsen 32 in einem Winkel α bzw. α' angeordneten ringförmigen Wülsten 44 und Ausnehmungen 46 sind zwei Möglichkeiten für eine solche Hin- und Herverformung der Oberfläche 16' des Längsprofils 16 möglich. Zum einen sind die zwei Walzen 22'' bzw. 36'' entsprechend den in den Fig. 3A und 4 gezeigten Ausführungsbeispiel bei im Wesentlichen entgegengesetzter Vorlaufstellung der Wülste 44 und Ausnehmungen 46 in gleicher Drehrichtung antreibbar. Zum anderen ist es denkbar, die zwei Walzen 22'' bzw. 36" bei gleicher Vorlaufstellung der Wülste 44 und Ausnehmungen 46 in entgegengesetzter Drehrichtung anzutreiben (nicht gezeigt). Beide Ausführungsformen sind dabei in ihrer Wirkung und Funktion gleichbedeutend.

Den Fig. 3A, 4 und 5B ist schließlich noch entnehmbar, dass einige Paare von Walzen 22, 22''' bzw. 36, 36''' eine glatte Oberfläche aufweisen. Die Walzen 22, 22''' bzw. 36, 36''' sind den Walzen 22', 22'' bzw. 36' 36'' mit entsprechendem Außenprofil 26, 26' bzw. 28, 28' in Bewegungsrichtung des Längsprofils 16 gemäß Pfeil 24 vor- und/oder nachgeordnet. Die in Bewegungsrichtung anströmseitigen Walzen 22 bzw. 36 sind dabei mit einem geringfügig kleineren Außendurchmesser, die in Bewegungsrichtung abströmseitigen Walzen 22''' bzw. 36''' mit einem geringfügig größeren Außendurchmesser ausgestaltet.

Es ist ohne weiteres möglich, nur die Walzen 22', 36' oder 22'', 36'' vorzusehen und/oder die Walzen 22', 36' und/oder 22'', 36'' untereinander oder auch miteinander in jeder anderen Reihenfolge zu kombinieren. So besteht beispielsweise die Möglichkeit, eine Walze 22' mit dem Außenprofil 26, eine Walze 22'' mit Außenprofil 28, eine Walze 22'' mit dem Außenprofil 28' und eine Walze 22' mit Außenprofil 26', oder in jeder anderen Kombination, in Reihe anzuordnen.

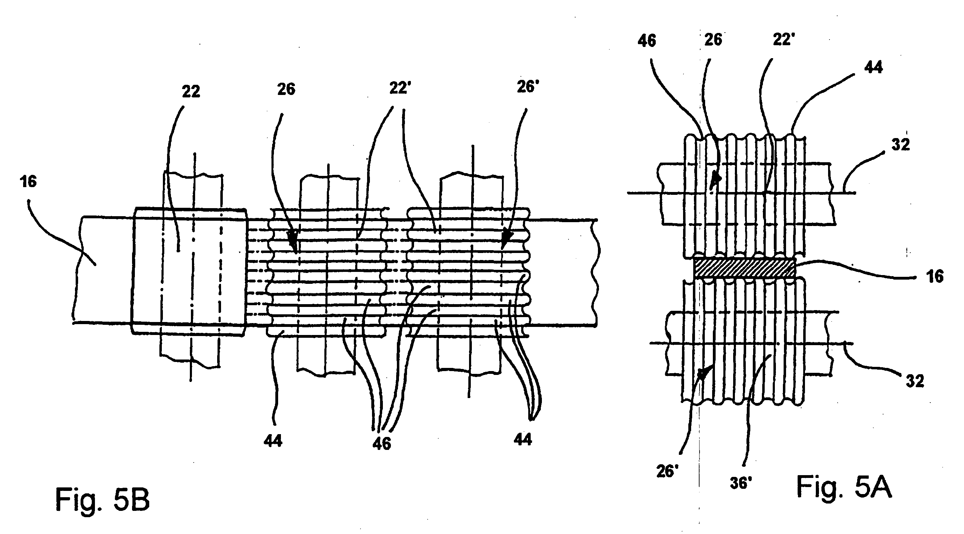

Wie insbesondere in der Fig. 5A dargestellt ist, können auch die einander zugeordneten Walzen 22', 36' mit voneinander unterschiedlichen Außenprofilen 26 bzw. 26' etc. ausgebildet sein. Entsprechendes gilt für die Walzen 22'', 36''.

Zurückkommend auf die Fig. 1 ist der Einrichtung 18 zur Eigenspannungserzeugung in dem Längsprofil 16 optional ein Haspel 56 nachgeordnet, auf den das Längsprofil 16 nach der Eigenspannungserzeugung in der erfindungsgemäßen Einrichtung 18, gegebenenfalls zum Transport an andere Stelle, aufgewikkelt werden kann.

Der Einrichtung 18 zur Erzeugung von Eigenspannungen in dem Längsprofil 16 bzw. nach dem Haspel 56 ist sodann eine Einrichtung 58 zum Zuschneiden, insbesondere zum Ausstanzen, des unter Eigenspannungen gesetzten Längsprofils 16 nachgeordnet ist (nicht im Einzelnen gezeigt).

Nach der Einrichtung 58 zum Zuschneiden, insbesondere zum Ausstanzen, ist eine Einrichtung 60 zum (Tief-)Ziehen des unter Eigenspannungen gesetzten und zugeschnittenen Abschnittes des Längsprofils angeordnet. In herkömmlicher Weise wird der unter Eigenspannungen gesetzte und zugeschnittene Abschnitt des Längsprofils 16 mittels einer (Tief-)Ziehform mit einer etwa topfförmigen Gestalt versehen.

An die Einrichtung 60 zum (Tief-)Ziehen schließt sich eine Einrichtung 62 zur spanlosen Formgebung eines kappenförmigen Elementes 64 und zur Ausbildung einer Bördelung 66 oder dergleichen Rand an.

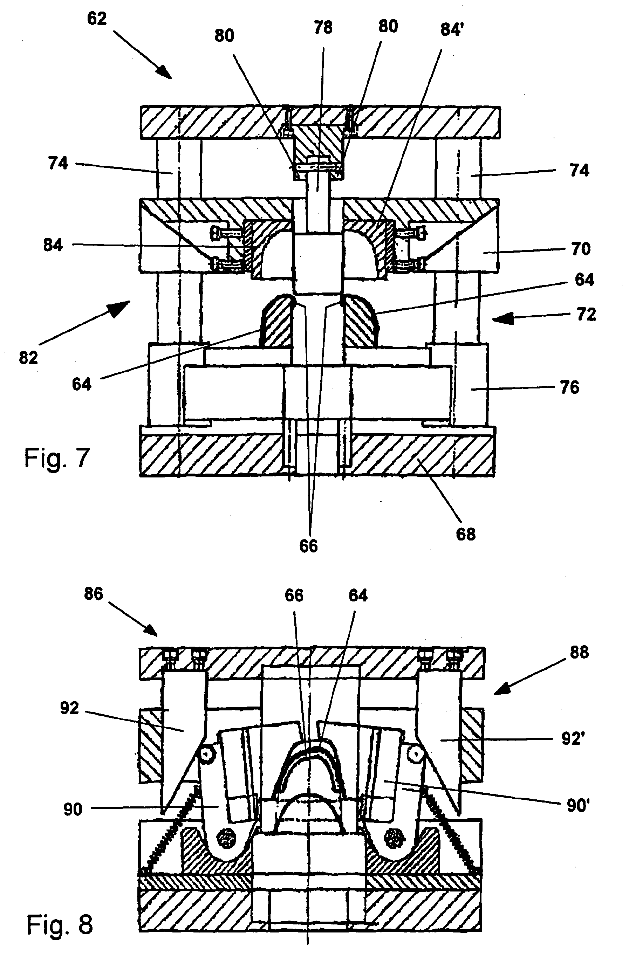

In der Fig. 7 ist die Formgebungseinrichtung 62 im Einzelnen schematisch dargestellt. Die Formgebungseinrichtung 62 besteht aus einem Rahmengestell 68, in dem ein Schlitten 70 über eine Führungseinrichtung 72, beispielsweise in Form von Führungsstangen 74 oder dergleichen, höhenverstellbar aufgenommen ist. Der Schlitten 70 ist über ein mechanisch, elektrisch, pneumatisch oder hydraulisch betätigbares Antriebselement (nicht näher dargestellt) gegenüber dem Rahmengestell relativ bewegbar. Das betätigbare Antriebselement ist vorzugsweise als Druckzylinder ausgebildet.

Bei dem in der Fig. 7 dargestellten Ausführungsbeispiel kann darüber hinaus ein zweiter Schlitten 76 vorgesehen sein, der im Wesentlichen entsprechend dem Schlitten 70 ausgebildet und von dem Rahmengestell 68 aufgenommen ist, im Übrigen aber der Aufnahme und der Abstützung sowie der relativen Bewegung des topfförmigen Profils bzw. der daraus gebildeten zwei kappenförmigen Elemente 64 dient.

Entsprechend der Fig. 7 umfasst die Formgebungseinrichtung 62 eine Schneideeinrichtung 78 zur Trennung des etwa topfförmigen Profils in zwei, insbesondere zueinander spiegelsymmetrische, kappenförmige Elemente 64. Die Schneideeinrichtung 78 ist bei dem vorliegenden Ausführungsbeispiel an dem nach oben und unten verfahrbaren Schlitten 70 angebracht. Die Schneideeinrichtung 78 trennt beim Herunterfahren des Schlittens 70 bzw. Herauffahren des Schlittens 76 einen mittleren, etwa bandbreiten Abschnitt aus dem topfförmigen Profil heraus, wobei zwei kappenförmige Elemente 64 gebildet werden.

Darüber hinaus weist die Formgebungseinrichtung 62 eine Abkanteinrichtung 80 zur Ausbildung der Bördelung 66 oder dergleichen Randes an jedem der zwei kappenförmigen Elemente 64 auf. Auch die Abkanteinrichtung 80 ist an dem nach oben und unten verfahrbaren Schlitten 70 angebracht. Die Abkänteinrichtung 80 wirkt dabei derart, dass unmittelbar nach Ausschneiden bzw. Abtrennen des mittleren, bandbreiten Abschnittes, d.h. nahezu zeitgleich, die noch überstehenden Enden jedes der beiden kappenförmigen Elemente 64 nachfolgend von einem Stempel nach unten umgebogen werden, wodurch die Bördelung 66 oder dergleichen Rand an- bzw. ausgeformt wird.

Schließlich ist die Formgebungseinrichtung 62 noch mit einer Druckpresse 82 oder dergleichen versehen, um die zwei kappenförmigen Elemente 64 in einem zu der Bördelung 66 oder dergleichen Rand benachbarten Bereich, welcher im Wesentlichen der Vorderseite des späteren Einsatzes 12 entspricht, zu verdichten. Mittels der Druckpresse 82 kann die Oberfläche des unter Eigenspannungen gesetzten Topfprofils zusätzlich bis zu einer Oberflächentiefe von etwa 500 µm, insbesondere von etwa 1 bis 20 µm und vorzugsweise von etwa 1 µm verdichtet werden.

Wie in der Fig. 7 beispielhaft dargestellt ist, umfasst die Druckpresse 82 zur Verdichtung der Oberfläche des Topfprofils zwei an Form und Abmessung der kappenförmigen Elemente 64 angepasste Pressformen 84, 84', die mit entsprechend ausgebildeten Gegenformen (nicht sichtbar) zur Abstützung der kappenförmigen Elemente 64 zusammenwirken. Die Pressformen 84, 84' beaufschlagen die äußere, konvex ausgebildete Oberfläche des der kappenförmigen Elemente 64, um diese zu verdichten.

Bevorzugt sind in der Formgebungseinrichtung 62 die Schneideeinrichtung 78, die Abkanteinrichtung 80 und die Druckpresse 82 integral angeordnet. Auf diese Weise lassen sich mehrere Arbeitsgänge nahezu gleichzeitig vornehmen, wodurch sich die Wirtschaftlichkeit der erfindungsgemäßen Formgebungseinrichtung 62 verbessern lässt.

Der Formgebungseinrichtung 62 bei der in der Fig. 1 gezeigten Ausführungsform der Vorrichtung 10 nach der Erfindung ist wiederum eine Einrichtung 86 zur Verdichtung des Einsatzes 12 nachgeordnet.

Eine Ausführungsform der Verdichtungseinrichtung 86 ist in der Fig. 8 dargestellt. Demnach umfasst die Verdichtungseinrichtung 86 eine Richt- und Druckpresse 88, um die zwei kappenförmigen Elemente 64 und die Bördelung 66 oder dergleichen Rand zunächst zu zentrieren, sodann nachzurichten und schließlich (nach-)zuverdichten. Dies erfolgt wiederum in einem einzigen Arbeitsgang.

Zu diesem Zweck sind für jedes kappenförmige Element 64 zwei seitlich federbelastete, verschwenkbare Matrizenhälften 90, 90' vorgesehen, die über eine Kulissenführung 92, 92' jeweils seitlich aus einer Montagestellung für die zwei kappenförmigen Elemente 64 in eine Druckbeaufschlagungsstellung, um umgekehrt, verschwenkt werden. Auf diese Weise wird die maximale Druckspannung, welche die kappenförmigen Elemente 64 und damit letztlich die Einsätze selbst formbeständig aushalten, noch zusätzlich erhöht.

Schließlich ist nach der Verdichtungseinrichtung 86 bei der Ausführungsform der erfindungsgemäßen Vorrichtung 10 nach der Fig. 1 noch eine Einrichtung 94 zur Feinbemaßung und Flächenverdichtung der zwei kappenförmigen Elemente 64 und der Bördelung 66 oder dergleichen Rand angeordnet.

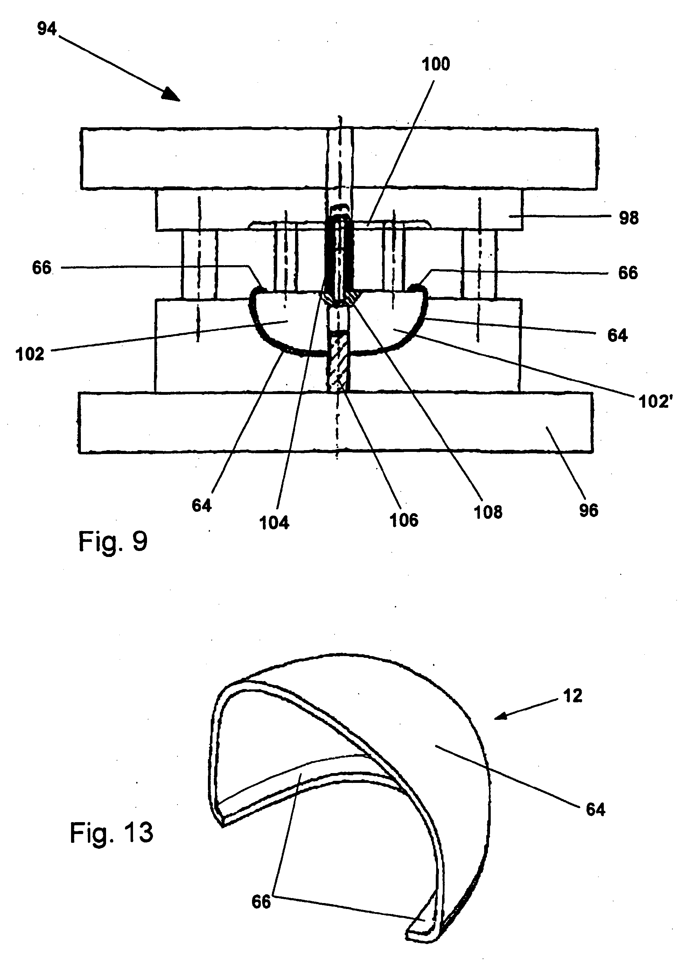

Mittels der Einrichtung 94, wie in der Fig. 9 näher dargestellt ist, können die zwei kappenförmigen Elemente 64 zusammen mit der Bördelung 66 oder dergleichen Rand planiert, feingerichtet und - sofern gewünscht - zuletzt (flächen-) verdichtet werden. Die Einrichtung 94 zur Feinbemaßung und Flächenverdichtung umfasst zu diesem Zweck ein Rahmengestell 96 und einen vom dem Rahmengestell 96 verschiebbar aufgenommenen Schlitten 98, der über eine Ausnehmung 100, matrizenförmige Schalenhälften 102, 102' und entsprechend ausgebildete Führungselemente 104, 106 und 108 mit dem Rahmengestell 96 zusammenwirkt.

Bei der nachfolgenden Beschreibung eines Ausführungsbeispiels eines erfindungsgemäß ausgebildeten Sicherheits- oder Schutzschuhs 14 und einer Ausführungsform eines Einsatzes 12 nach der Erfindung sind einander entsprechende, gleiche Bauteile jeweils ebenfalls mit identischen Bezugsziffern versehen.

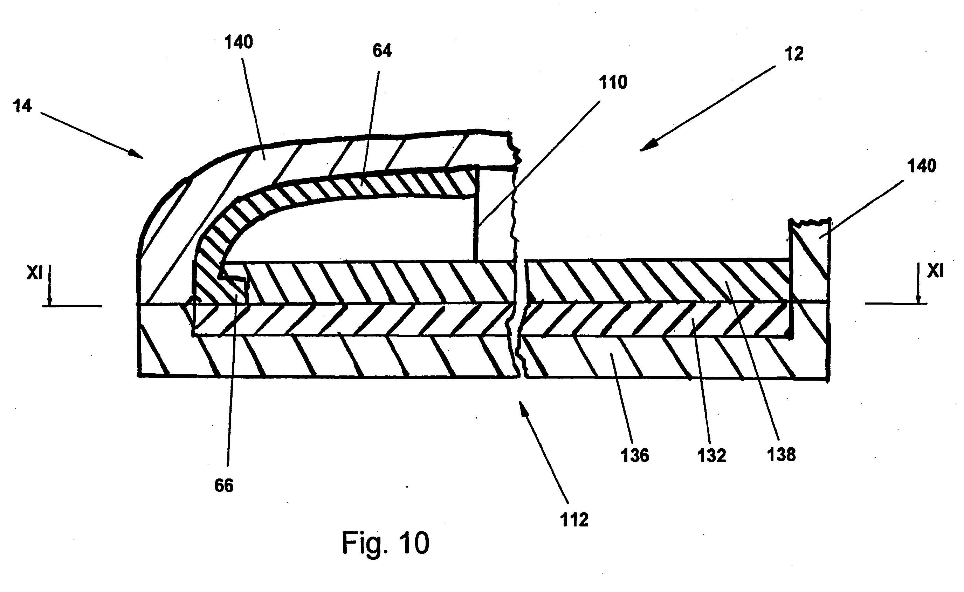

In der Fig. 10 ist schematisch eine Ausführungsform eines erfindungsgemäßen Einsatzes 12 dargestellt, der in einem Sicherheits- oder Schutzschuh 14 integriert ist. Bei dem in der Fig. 10 gezeigten Sicherheits- oder Schutzschuh 14 handelt es sich beispielhaft um einen Halbschuh. Der Einsatz 12 lässt sich jedoch gleichermaßen für Sicherheits- oder Schutzschuhe anderer Form, wie zum Beispiel niedrige, halbhohe und hohe sowie oberschenkelhohe Stiefel, verwenden. Die Einsatz- und Variationsmöglichkeiten, die der erfindungsgemäße Einsatz 12 in bezug auf Sicherheits- oder Schutzschuhe mit sich bringt, sind daher ausgesprochen groß.

Wie aus der Fig. 10 hervorgeht, umfasst der erfindungsgemäße Einsatz 12 ein etwa kappenförmiges Element 64. Das etwa kappenförmige Element 64 weist eine Öffnung 110 zur Aufnahme wenigstens eines Teils eines Fußes, insbesondere von Zehen, eines Menschen (nicht dargestellt) auf. Das etwa kappenförmige Element 64 ist als Widerstand gegen Stoßeinwirkung aufgrund herunterfallender Gegenstände etc. vorgesehen.

Des Weiteren umfasst der erfindungsgemäße Einsatz 12 neben dem etwa kappenförmigen Element 64 eine Bördelung 66 oder dergleichen Rand. Die Bördelung 66 oder dergleichen Rand schließt sich an das etwa kappenförmige Element 64 an und stützt sich an bzw. auf einer Sohle 112 eines Sicherheits- oder Schutzschuhs 14, wie weiter unten ausgeführt ist, ab.

Die sich an bzw. auf der Sohle 112 des Sicherheits- oder Schutzschuhs 14 abstützende Bördelung 66 oder dergleichen Rand erstreckt sich gegenüber der Wandung 114 des etwa kappenförmigen Elementes 64 in dem Übergangsbereich 116 zwischen dem etwa kappenförmigen Element 64 und der Bördelung 66 oder dergleichen Rand in einem Winkel von etwa 90°. Vorzugsweise ist die sich an bzw. auf der Sohle 112 des Sicherheits- oder Schutzschuhs 14 abstützende Bördelung 66 oder dergleichen Rand dabei gegenüber der Wandung 114 des etwa kappenförmigen Elementes 64 in einem Winkel von etwa 90° nach innen umgebogen.

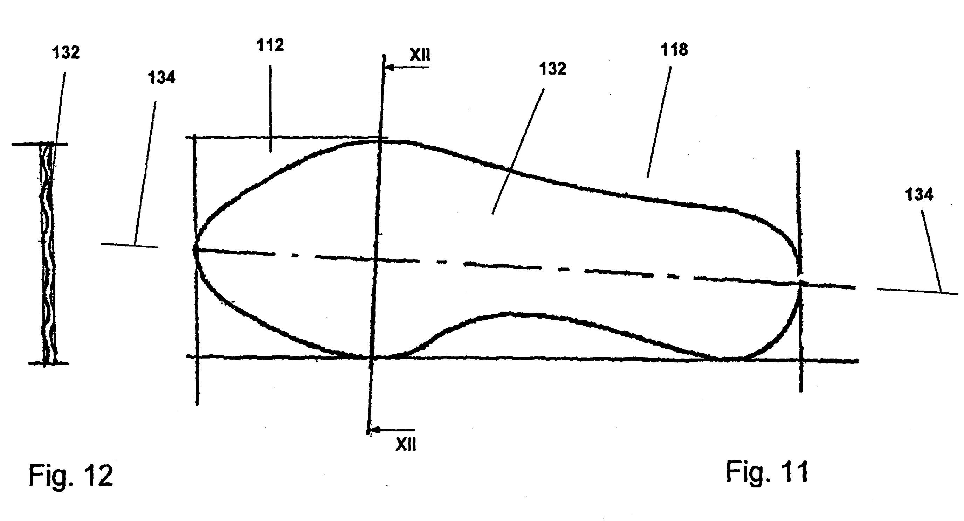

Es ist zwar gleichermaßen denkbar, die Bördelung 66 oder dergleichen Rand in einem Winkel von etwa 90° nach außen umzubiegen. Allerdings stehen einer solchen konstruktiven Ausgestaltung auf der einen Seite eine etwas kleinere Festigkeit des im Wesentlichen kappenförmig ausgebildeten Elementes 64 insgesamt und auf der anderen Seite Platzverhältnisse des Sicherheits- oder Schutzschuhs 14, begrenzt durch die in der Fig. 11 angedeuteten Ablasskante 118 der Sohle 112, entgegen.

Das etwa kappenförmige Element 64 und die sich an bzw. auf der Sohle 112 des Sicherheits- oder Schutzschuhs 14 abstützende Bördelung 66 oder dergleichen Rand sind aus Aluminium oder einer Aluminium enthaltenden Legierung ausgebildet, wobei deren Oberflächen unter Druckeigenspannungen und die unter deren Oberflächen liegenden Zonen unter Zugeigenspannungen in axialer und tangentialer Richtung gesetzt sind. Auf diese Weise lässt sich das Eigengewicht des Einsatzes 12 nach der Erfindung gegenüber bekannten Einsätzen, die in aller Regel aus Stahl oder einer Stahl enthaltenden Legierung gebildet sind, wesentlich verringern. Gleichzeitig ist durch die in das Aluminium bzw. die Aluminium enthaltende Legierung induzierten Druck- und Zugeigenspannungen sichergestellt, dass der Einsatz 12 über eine ausreichend hohe Härte und (Schlag- bzw. Stoß-)Festigkeit, die sich nach DIN-Normen bestimmen und insoweit ganz speziellen Erfordernissen unterliegen, verfügt.

Um die Härte und (Schlag- bzw. Stoß-)Festigkeit des erfindungsgemäßen Einsatzes 12 noch weiter zu erhöhen, weist der Übergangsbereich 116 zwischen dem etwa kappenförmigen Element 64 und der Bördelung 66 oder dergleichen Rand entsprechend den Fig. 13 bis 16 eine Krümmung, insbesondere Biegekrümmung, auf.

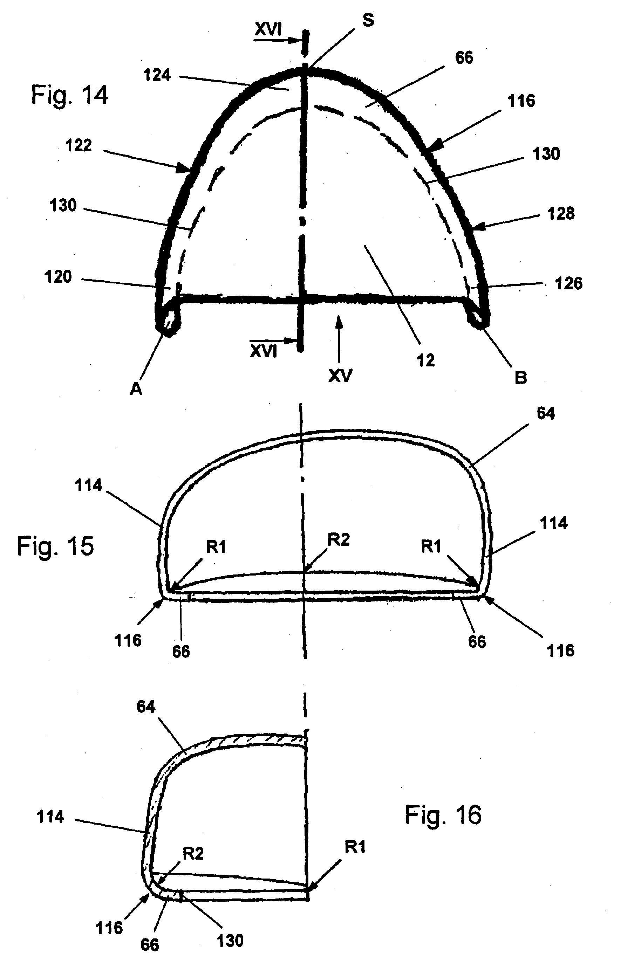

Wie aus insbesondere aus der Fig. 14 in Verbindung mit den Fig. 15 und 16 hervorgeht, nimmt die Krümmung dabei in dem Übergangsbereich 116 von einem Ende 120 (Punkt A) der Bördelung 66 oder dergleichen Rand auf der einen, in dem dargestellten Fall linken Seite 122 der Öffnung 110 bzw. des hinteren Endes des etwa kappenförmigen Elementes 64 hin zu dem vorderen Ende 124 (Punkt bzw. Scheitelpunkt S) des etwa kappenförmigen Elementes 64 zu. Ausgehend von dem vorderen Ende 124 (Punkt bzw. Scheitelpunkt S) des etwa kappenförmigen Elementes 64 nimmt die Krümmung in dem Übergangsbereich 116 hin zu dem anderen Ende 126 (Punkt B) der Bördelung 66 oder dergleichen Rand auf der anderen, in dem dargestellten Fall rechten Seite 128 der Öffnung bzw. des hinteren Endes 110 des etwa kappenförmigen Elementes 64 entsprechend wieder ab. Bei umgekehrter Betrachtung ergibt sich insgesamt eine gleiche Ausgestaltung.

In bevorzugter Weise verläuft die Zunahme der Krümmung, insbesondere Biegekrümmung, ausgehend von dem einen Ende 120 (Punkt A) der Bördelung 66 oder dergleichen Rand auf der einen Seite 122 der Öffnung 110 des etwa kappenförmigen Elementes 64 hin zu dem vorderen Ende 124 (Punkt bzw. Scheitelpunkt S) des etwa kappenförmigen Elementes 64 und die Abnahme der Krümmung, insbesondere Biegekrümmung, ausgehend von dem vorderen Ende (Punkt bzw. Scheitelpunkt S) des etwa kappenförmigen Elementes 64 hin zu dem anderen Ende 126 (Punkt B) der Bördelung 66 oder dergleichen Rand auf der anderen Seite 128 der Öffnung 110 des etwa kappenförmigen Elementes 64, und umgekehrt, im Wesentlichen kontinuierlich. Durch einen solchen stufenlosen Übergang sind möglicherweise auftretende Spannungsspitzen in dem Einsatz 12 bei Auftreten von äußeren Schlag- oder Stoßeinwirkungen ausgeschlossen.

In diesem Zusammenhang hat es sich in der Praxis als ausgesprochen vorteilhaft erwiesen, dass der Übergangsbereich 116 zwischen dem etwa kappenförmigen Element 64 und der Bördelung 66 oder dergleichen Rand einen Radius R1, R2, insbesondere Biegeradius, aufweist. Dieser Radius R1, R2, insbesondere Biegeradius, sollte zweckmäßigerweise an dem einen bzw. anderen Ende 120, 126 (Punkt A, Punkt B) des etwa kappenförmigen Elementes 64 in einem Bereich von ungefähr 0,1 mm bis etwa 5 mm und an dem vorderen Ende 124 (Punkt bzw. Scheitelpunkt S) des etwa kappenförmigen Elementes 64 in einem Bereich von ungefähr 1 mm bis circa 14 mm liegen. Von besonderem Vorteil ist, wenn der Radius R1 an dem einen bzw. anderen Ende 120, 126 (Punkt A, Punkt B) des etwa kappenförmigen Elementes 64 etwa 1 mm und der Radius R2 an dem vorderen Ende 124 (Punkt bzw. Scheitelpunkt S) des etwa kappenförmigen Elementes 64 etwa 2 mm beträgt. Bei einer Materialstärke von beispielsweise 2,5 mm beträgt der Radius R1 ganz bevorzugt 1 mm, der Radius R2 2 mm. In jedem Fall ist der Radius R1 kleiner als der Radius R2.

Durch die unterschiedlichen Radien R1, R2 an dem einen und anderen Ende 120, 126 (Punkt A, Punkt B) bzw. an dem vorderen Ende 124 (Punkt bzw. Scheitelpunkt S) des etwa kappenförmigen Elementes 64 ist sichergestellt, dass das Material des etwa kappenförmigen Elementes 64 nicht an irgendeiner Stelle ausreißen, fließen oder sich sonstwie nachteilig bzw. fehlerbehaftet verändern kann, wodurch wiederum die Härte und (Schlag- bzw. Stoß-)Festigkeit beeinflusst werden könnte. Auch lässt sich damit eine allseits glatte Oberfläche des etwa kappenförmigen Elementes 64 erhalten.

Beispielsweise kann das Ausgangsmaterial für das etwa kappenförmige Element 64 eine Blechstärke von 2,5 mm aufweisen. Nach der Formgebung und (Um-)Biegung der Bördelung 66 oder dergleichen Rand kann das etwa kappenförmige Element 64 dann eine im Wesentlichen konstante Dicke von 2,5 mm besitzen. Lediglich im Bereich des vorderen Endes 124 (Punktes bzw. Scheitelpunktes S) des etwa kappenförmigen Elementes 64 ist eine geringfügig größere Materialverdickung zu beobachten.

Um größere Biegekräfte durch den Einsatz 12 nach der Erfindung aufnehmen zu können, sind die Kanten 130 wenigstens der Bördelung 66 oder dergleichen Rand, die sich an bzw. auf der Sohle 112 des Sicherheits- oder Schutzschuhs 14 abstützt, oberflächenseitig verdichtet.

Wie in der Fig. 10 dargestellt ist, ist der sich an bzw. auf der Sohle 112 des Sicherheits- oder Schutzschuhs 14 abstützenden Bördelung 66 oder dergleichen Rand eine durchtrittsichere Einlage 132 zugeordnet. Diese durchtrittsichere Einlage 132 besteht aus Aluminium oder einer Aluminium enthaltenden Legierung, wobei deren Oberflächen wiederum unter Druckeigenspannungen und die unter deren Oberflächen liegenden Zonen unter Zugeigenspannungen in axialer und tangentialer Richtung stehen. Diese Druck- und Zugeigenspannungen sind auf bzw. in die durchtrittsichere Einlage 132 auf dieselbe Weise eingebracht, die bereits im Zusammenhang mit dem etwa kappenförmige Element 64 beschrieben wurden. Insoweit gilt Gleiches.

Zusätzlich ist die durchtrittsichere Einlage 132 gewellt ausgebildet, derart, dass die Welligkeit etwa senkrecht zur Längsachse 134 des etwa kappenförmigen Elementes 64 und damit des gesamten Sicherheits- oder Schutzschuhs 14 verläuft. Hierdurch wird eine Federspannung erreicht, welche die Biegeelastizität verbessert, aber auch die Durchtrittsicherheit noch weiter erhöht. Zugleich ist mit der Welligkeit eine verbesserte Klebfähigkeit erreicht. Besondere Nacharbeiten der durchtrittsicheren Einlage 132, wie zum Beispiel Sandstrahlen, das bisher bei bekannten Einlagen erforderlich war, können somit entfallen.

Um den Gehkomfort dabei nicht zu beeinträchtigen ist die dem etwa kappenförmigen Element 64 zugewandte Oberfläche und/oder abgewandte Unterfläche der gewellt ausgebildeten durchtrittsicheren Einlage 132 durch eine korrespondierend ausgeformte Schicht oder Füllmasse, gegebenenfalls eines Teils der Sohle 112, ebenflächig ausgeformt (nicht im Einzelnen dargestellt).

Als Aluminium enthaltende Legierung für das etwa kappenförmige Element 64 und/oder die durchtrittsichere Einlage 132 ist/sind vorzugsweise AlMg_{4,5}Mn, AlMgSi_{0,5}, AlMgSi, AlMg₅, AlZn_{4,5}Mg, AlCuMg, AlCuMg₂, AlZnMgCu_{0,5}, AlZnMgCu_{1,5}. AlCuMgPb vorgesehen.

Anhand der Fig. 10 ist schließlich noch der Aufbau der Sohle 112 des Sicherheits- oder Schutzschuhs, in welchem der Einsatz 12 eingebracht und mittels Verklebung oder auf sonstige bekannte Weise, wie mittels Vulkanisierung etc., befestigt ist, näher erläutert. Demnach umfasst die Sohle 112 zunächst eine außenliegende Grundsohle bzw. einen Leisten 136. Die Grundsohle 136 besteht im Allgemeinen aus Kunststoff oder Gummi und ist mit einem Profil (nicht gezeigt) versehen. Auf die Grundsohle 136 ist die durchtrittsichere Einlage 132 aufgelegt. Die durchtrittsichere Einlage 132 wiederum wird von einer Brandsohle 138 zum Beispiel aus Leder überdeckt. Um die durchtrittsichere Einlage 132 für den Fall, dass diese gewellt ausgebildet ist, ebenflächig auszuformen, können gegebenenfalls eine korrespondierend ausgeformte Schicht oder Füllmasse, gegebenenfalls als integrierter Teil der Grundsohle 136 und/oder der Brandsohle 138, vorgesehen sein. Grundsohle 136 und/oder Einlage 132 und/oder Brandsohle 136 sind in vorliegendem Ausführungsbeispiel jeweils miteinander verklebt. Eine Außenhaut 140 des Sicherheits- oder Schutzschuhs 14 ist schließlich mit dem etwa kappenförmige Element 64 dieses überdeckend durch Verklebung verbunden.

## Patentansprüche

1. Verfahren zur Herstellung von Einsätzen (12) für Sicherheits- oder Schutzschuhe (14) aus einem unprofilierten, wenigstens eine ebene Oberfläche (16') aufweisenden Längsprofil (16) aus Aluminium oder einer Aluminium enthaltenden Legierung, bei welchem das unprofilierte Längsprofil (16) zunächst durch mindestens eine wenigstens teilweise mit einem Außenprofil (26, 26', 28, 28') versehene Walze (22', 22", 36', 36'') zumindest teilweise beaufschlagt wird, derart, dass die behandelte Oberfläche (16') des Längsprofils (16) unter Druckeigenspannungen und die unter der behandelten Oberfläche (16') liegenden Zonen des Längsprofils (16) unter Zugeigenspannungen in axialer und tangentialer Richtung gesetzt werden, das unter Druck- und Zugeigenspannungen gesetzte Längsprofil (16) dann zugeschnitten, spanlos geformt und mit einer Bördelung (66) oder dergleichen Rand versehen wird sowie der Einsatz (12) schließlich zumindest teilweise verdichtet wird.

2. Verfahren nach Anspruch 1, **dadurch gekennzeichnet, dass** das Längsprofil (16) durch mindestens eine wenigstens teilweise mit einem Außenprofil (26, 26', 28, 28') versehene Walze (22', 22'', 36', 36''), die im Wesentlichen senkrecht oder in einem Winkel (β) zum Längsprofil (16) angeordnet und um deren Längsachse (32) drehbar ist, beaufschlagt wird.

3. Verfahren nach Anspruch 1 oder 2, **dadurch gekennzeichnet, dass** das Längsprofil (16) durch mindestens zwei jeweils wenigstens teilweise mit einem Außenprofil (26, 26', 28, 28') versehene Walze/n (22', 22'', 36', 36'') aufeinanderfolgend in entgegengesetzter Richtung beaufschlagt wird.

4. Verfahren nach Anspruch 2 oder 3, **dadurch gekennzeichnet, dass** das Längsprofil (16) durch die mindestens eine wenigstens teilweise mit einem Außenprofil (26, 26', 28, 28') versehene Walze (22', 22'') beaufschlagt wird und durch mindestens eine weitere wenigstens teilweise mit einem Außenprofil (26, 26', 28, 28') versehene Walze (36', 36'') oder eine unprofilierte Walze (36, 36''') oder dergleichen Abstüzeinrichtung, die zu der mindestens einen Walze (22', 22'') gegenüberliegend beabstandet ist, beaufschlagt bzw. abgestützt wird.

5. Verfahren nach einem der Ansprüche 1 bis 4, **dadurch gekennzeichnet, dass** die zu behandelnde Oberfläche (16') des Längsprofils (16) durch die mindestens eine Walze (22', 22'', 36', 36'') mit einem Außenprofil (26, 26', 28, 28') in Form von ringförmigen Wülsten (44) und Ausnehmungen (46) bearbeitet werden.

6. Verfahren nach Anspruch 5, **dadurch gekennzeichnet, dass** die zu behandelnde Oberfläche (16') des Längsprofils (16) durch mehrere Walzen (22', 22'', 36', 36'') mit einem Außenprofil (26, 26', 28, 28') in Form der ringförmigen Wülste (44) und Ausnehmungen (46) bearbeitet wird, wobei die ringförmigen Wülste (44) und Ausnehmungen (46) von zueinander benachbarten Walzen (22', 22'', 36', 36'') in deren Ausgestaltung und Anordnung voneinander unterschiedlich sind und/oder die jeweils zueinander benachbarten Walzen (22', 22'', 36', 36'') in verschiedener Drehrichtung angetrieben werden.

7. Verfahren nach Anspruch 5 oder 6, **dadurch gekennzeichnet, dass** die zu behandelnde Oberfläche (16') des Längsprofils (16) durch Walzen (22", 36'') mit einem Außenprofil (28, 28') in Form von zu den Längsachsen (32) der Walzen (22'', 36'') in einem Winkel (α, α') angeordneten ringförmigen Wülsten (44) und Ausnehmungen (46) bearbeitet wird, wobei die Walzen (22'', 36'') bei im Wesentlichen entgegengesetzter Vorlaufstellung der Wülste (44) und Ausnehmungen (46) in gleicher Drehrichtung oder bei im Wesentlichen gleicher Vorlaufstellung der Wülste (44) und Ausnehmungen (46) in entgegengesetzter Drehrichtung angetrieben werden.

8. Verfahren nach einem der Ansprüche 5 bis 7, **dadurch gekennzeichnet, dass** die zu behandelnde Oberfläche (16') des Längsprofils (16) durch Walzen (22', 36') mit einem Außenprofil (22, 22') in Form von zu deren Längsachsen (32) senkrechten, insbesondere zueinander axial versetzten, ringförmigen Wülsten (44) und Ausnehmungen (46) bearbeitet wird.

9. Verfahren nach einem der Ansprüche 1 bis 8, **dadurch gekennzeichnet, dass** das Längsprofil (16) durch Ausstanzen zugeschnitten wird.

10. Verfahren nach einem der Ansprüche 1 bis 9, **dadurch gekennzeichnet, dass** der zugeschnittene Abschnitt des Längsprofils (16) spanlos durch (Tief-)Ziehen zu einem etwa topfförmigen Profil geformt wird.

11. Verfahren nach einem der Ansprüche 1 bis 10, **dadurch gekennzeichnet, dass** das etwa topfförmige Profil in zwei, insbesondere zueinander spiegelsymmetrische, kappenförmige Elemente (64) getrennt wird.

12. Verfahren nach einem der Ansprüche 1 bis 11, **dadurch gekennzeichnet, dass** die zwei, insbesondere zueinander spiegelsymmetrischen, kappenförmige Elemente (64) jeweils mit einer Bördelung (66) oder dergleichen Rand versehen und in einem zu der Bördelung (66) oder dergleichen Rand benachbarten Bereich durch Druckbeaufschlagung verdichtet werden.

13. Verfahren nach Anspruch 11 oder 12, **dadurch gekennzeichnet, dass** die Trennung des etwa topfförmigen Profils und die Abkantung sowie Verdichtung der zwei, insbesondere zueinander spiegelsymmetrischen, kappenförmigen Elemente (64) zeitgleich oder in zeitlicher Abfolge zueinander vorgenommen wird.

14. Verfahren nach einem der Ansprüche 1 bis 13, **dadurch gekennzeichnet, dass** die zwei kappenförmigen Elemente (64) zusammen mit der Bördelung (66) oder dergleichen Rand gerichtet und/oder durch Druckbeaufschlagung verdichtet werden.

15. Verfahren nach einem der Ansprüche 1 bis 14, **dadurch gekennzeichnet, dass** die zwei kappenförmigen Elementen zusammen mit der Bördelung oder dergleichen Rand zu zwei Einsätzen auf Feinmaß gebracht und anschließend gegebenenfalls flächenverdichtet werden.

16. Vorrichtung zur Herstellung von Einsätzen (12) für Sicherheits- oder Schutzschuhe (14) aus einem unprofilierten, wenigstens eine ebene Oberfläche (16') aufweisenden Längsprofil (16) aus Aluminium oder einer Aluminium enthaltenden Legierung, zur Durchführung des Verfahrens nach einem der vorhergehenden Ansprüche, die eine Einrichtung (18) zur Erzeugung von Eigenspannungen in dem unprofilierten Längsprofil (16) mit mindestens einer im Wesentlichen senkrecht oder unter einem Winkel (β) zur Längsrichtung (Pfeil 24) des Längsprofils (16) angeordneten Walze (22', 22", 36', 36''), welche wenigstens teilweise mit einem die Oberfläche (16') des Längsprofils (16) beaufschlagenden Außenprofil (26, 26', 28, 28') in Form von zu der Längsachse (32) der mindestens einen Walze (36', 36'') in einem Winkel (α, α') oder senkrecht angeordneten ringförmigen Wülsten (44) und Ausnehmungen (46) versehen und um deren Längsachse (32) drehbar sind, eine Einrichtung (58) zum Zuschneiden des unter Druck- und Zugeigenspannungen gesetzten Längsprofils (16), eine Einrichtung (60, 62) zur spanlosen Formgebung eines kappenförmigen Elementes (64) und Ausbildung einer Bördelung (66) oder dergleichen Rand an dem kappenförmigen Element (64) sowie- und eine Einrichtung (86, 94) zur Verdichtung des Einsatzes (12) umfasst.

17. Vorrichtung nach Anspruch 16, **dadurch gekennzeichnet, dass** die Einrichtung (18) zur Eigenspannungserzeugung mindestens eine weitere wenigstens teilweise mit einem Außenprofil (26, 26', 28, 28') versehene Walze (36', 36'') oder unprofilierte Walze (36, 36''') oder dergleichen Abstützeinrichtung (34) gegenüberliegend zugeordnet umfasst.

18. Vorrichtung nach Anspruch 16 oder 17, **dadurch gekennzeichnet, dass** der mindestens einen wenigstens teilweise mit einem Außenprofil (26, 28) versehenen Walze (22', 22'', 36', 36'') eine zusätzliche wenigstens teilweise mit einem Außenprofil (22', 28') versehene Walze (22', 22'', 36', 36'') in Bewegungsrichtung des Längsprofils (16) zur Beaufschlagung der Oberfläche (16') des Längsprofils (16) aufeinanderfolgend in entgegengesetzter Richtung nachgeordnet ist.

19. Vorrichtung nach Anspruch 18, **dadurch gekennzeichnet, dass** die zwei einander nachgeordneten Walzen (22'', 36'') ringförmige Wülste (44) und Ausnehmungen (46) aufweisen, die zu deren Längsachsen (32) in einem Winkel (α, α') angeordnet sind, wobei die zwei Walzen (22'', 36'') bei im Wesentlichen entgegengesetzter Vorlaufstellung der Wülste (44) und Ausnehmungen (46) in gleicher Drehrichtung oder bei im Wesentlichen gleicher Vorlaufstellung der Wülste (44) und Ausnehmungen (46) in entgegengesetzter Drehrichtung antreibbar sind.

20. Vorrichtung nach Anspruch 18 oder 19, **dadurch gekennzeichnet, dass** die zwei einander nachgeordneten Walzen (22', 36') ringförmige Wülste (44) und Ausnehmungen (46) aufweisen, die zu deren Längsachsen (32) senkrecht angeordnet sind, wobei die zwei Walzen (22', 36') und/oder die ringförmigen Wülste (44) und Ausnehmungen (46) zueinander axial versetzt sind.

21. Vorrichtung nach einem der Ansprüche 16 bis 20, **dadurch gekennzeichnet, dass** der Einrichtung (18) zur Eigenspannungserzeugung eine Einrichtung (58) zum Zuschneiden, insbesondere zum Ausstanzen, des unter Eigenspannungen gesetzten Längsprofils (16) nachgeordnet ist.

22. Vorrichtung nach einem der Ansprüche 16 bis 21, **dadurch gekennzeichnet, dass** eine Einrichtung (60) zum (Tief)Ziehen des unter Eigenspannungen gesetzten und zugeschnittenen Abschnittes des Längsprofils (16) vorgesehen ist.

23. Vorrichtung nach einem der Ansprüche 16 bis 22, **dadurch gekennzeichnet, dass** die Einrichtung (62) zur spanlosen Formgebung eines kappenförmigen Elementes (64) und zur Ausbildung einer Bördelung (66) oder dergleichen Rand eine Schneideeinrichtung (78) zur Trennung des etwa topfförmigen Profils in zwei, insbesondere zueinander spiegelsymmetrische, kappenförmige Elemente (64) umfasst.

24. Vorrichtung nach einem der Ansprüche 16 bis 23, **dadurch gekennzeichnet, dass** die Einrichtung (62) zur spanlosen Formgebung eines kappenförmigen Elementes (64) und zur Ausbildung einer Bördelung (66) oder dergleichen Rand eine Abkanteinrichtung (80) zur Ausbildung einer Bördelung (66) oder dergleichen Randes an jedem der zwei kappenförmigen Elemente (64) umfasst.

25. Vorrichtung nach einem der Ansprüche 16 bis 24, **dadurch gekennzeichnet, dass** die Einrichtung (62) zur spanlosen Formgebung eines kappenförmigen Elementes (64) und zur Ausbildung einer Bördelung (66) oder dergleichen Rand eine Druckpresse (82) zur Verdichtung der zwei kappenförmigen Elemente (64) in einem zu der Bördelung (66) oder dergleichen Rand benachbarten Bereich umfasst.

26. Vorrichtung nach einem der Ansprüche 23 bis 25, **dadurch gekennzeichnet, dass** die Schneideeinrichtung (78) und/oder die Abkanteinrichtung (80) und/oder die Druckpresse (82) integral ausgebildet sind.

27. Vorrichtung nach einem der Ansprüche 16 bis 26, **dadurch gekennzeichnet, dass** die Einrichtung (86) zur Verdichtung des Einsatzes (12) eine Richt- und Druckpresse (88) zur Richtung und Nachverdichtung der zwei kappenförmigen Elemente (64) und der Bördelung (66) oder dergleichen Rand umfasst.

28. Vorrichtung nach einem der Ansprüche 16 bis 27, **dadurch gekennzeichnet, dass** der Einrichtung (86) zur Verdichtung des Einsatzes (12) eine Einrichtung (94) zur Feinbemaßung und Flächenverdichtung der zwei kappenförmigen Elemente (64) und der Bördelung (66) oder dergleichen Rand umfasst.

29. Einsatz für Sicherheits- oder Schutzschuhe, der ein etwa kappenförmiges Element (64) mit einer Öffnung zur Aufnahme wenigstens eines Teils eines Fußes, insbesondere von Zehen, eines Menschen und eine sich an das etwa kappenförmige Element (64) anschließende, an bzw. auf einer Sohle (112) eines Sicherheits- oder Schutzschuhs (14) abstützende Bördelung (66) oder dergleichen Rand umfasst, wobei sich die an bzw. auf der Sohle (112) des Sicherheits- oder Schutzschuhs (14) abstützende Bördelung (66) oder dergleichen Rand gegenüber der Wandung (114) des etwa kappenförmigen Elementes (64) in dem Übergangsbereich (116) zwischen dem etwa kappenförmigen Element (64) und der Bördelung (66) oder dergleichen Rand in einem Winkel von etwa 90° erstreckt, wobei das etwa kappenförmige Element (64) und die sich an bzw. auf der Sohle (112) des Sicherheits- oder Schutzschuhs (14) abstützende Bördelung (66) oder dergleichen Rand aus Aluminium oder einer Aluminium enthaltenden Legierung ausgebildet sind, **dadurch gekennzeichnet, dass** deren Oberflächen unter Druckeigenspannungen und die unter deren Oberflächen liegenden Zonen unter Zugeigenspannungen in axialer und tangentialer Richtung stehen.

30. Einsatz nach Anspruch 29, **dadurch gekennzeichnet, dass** die sich an bzw. auf der Sohle (112) des Sicherheits- oder Schutzschuhs (14) abstützende Bördelung (66) oder dergleichen Rand gegenüber der Wandung (114) des etwa kappenförmigen Elementes (64) in einem Winkel von etwa 90° nach innen umgebogen ist.

31. Einsatz nach Anspruch 29 oder 30, **dadurch gekennzeichnet, dass** der Übergangsbereich (116) zwischen dem etwa kappenförmigen Element (64) und der Bördelung (66) oder dergleichen Rand eine Krümmung, insbesondere Biegekrümmung, aufweist, die ausgehend von einem Ende (120; Punkt A) der Bördelung (66) oder dergleichen Rand auf der einen Seite (122) der Öffnung (110) des etwa kappenförmigen Elementes (64) hin zu dem vorderen Ende (124; Punkt S) des etwa kappenförmigen Elementes (64) zunimmt und ausgehend von dem vorderen Ende (124; Punkt S) des etwa kappenförmigen Elementes (64) hin zu dem anderen Ende (126; Punkt B) der Bördelung (66) oder dergleichen Rand auf der anderen Seite (128) der Öffnung (110) des etwa kappenförmigen Elementes (64) abnimmt, und umgekehrt.

32. Einsatz nach Anspruch 31, **dadurch gekennzeichnet, dass** die Zunahme der Krümmung, insbesondere Biegekrümmung, ausgehend von dem einen Ende (120; Punkt A) der Bördelung (66) oder dergleichen Rand auf der einen Seite (122) der Öffnung (16) des etwa kappenförmigen Elementes (64) hin zu dem vorderen Ende (124; Punkt S) des etwa kappenförmigen Elementes (64) und die Abnahme der Krümmung, insbesondere Biegekrümmung, ausgehend von dem vorderen Ende (124; Punkt S) des etwa kappenförmigen Elementes (64) hin zu dem anderen Ende (126; Punkt B) der Bördelung (66) oder dergleichen Rand auf der anderen Seite (128) der Öffnung (110) des etwa kappenförmigen Elementes (64), und umgekehrt, im Wesentlichen kontinuierlich ist.

33. Einsatz nach einem der Ansprüche 29 bis 32, **dadurch gekennzeichnet, dass** der Übergangsbereich (110) zwischen dem etwa kappenförmigen Element (64) und der Bördelung (66) oder dergleichen Rand einen Radius (R1 bzw. R2), insbesondere Biegeradius, aufweist, der an dem einen bzw. anderen Ende (120; Punkt A, Punkt B) des etwa kappenförmigen Elementes (64) zwischen etwa 0,1 mm und etwa 5 mm, insbesondere 1 mm, und an dem vorderen Ende (124; Punkt S) des etwa kappenförmigen Elementes (64) zwischen etwa 1 mm und etwa 14 mm, insbesondere 2 mm, beträgt.

34. Einsatz nach einem der Ansprüche 29 bis 33, **dadurch gekennzeichnet, dass** die Kanten (130) wenigstens der sich an bzw. auf der Sohle (112) des Sicherheits- oder Schutzschuhs (14) abstützenden Bördelung (66) oder dergleichen Rand oberflächenseitig verdichtet sind.

35. Einsatz nach einem der Ansprüche 29 bis 34, **dadurch gekennzeichnet, dass** der sich an bzw. auf der Sohle (112) des Sicherheits- oder Schutzschuhs (14) abstützenden Bördelung (66) oder dergleichen Rand eine durchtrittsichere Einlage (132) aus Aluminium oder einer Aluminium enthaltenden Legierung zugeordnet ist, wobei deren Oberflächen unter Druckeigenspannungen und die unter deren Oberflächen liegenden Zonen unter Zugeigenspannungen in axialer und tangentialer Richtung stehen.

36. Einsatz nach Anspruch 35, **dadurch gekennzeichnet, dass** die durchtrittsichere Einlage (132) gewellt ausgebildet ist, derart, dass die Welligkeit etwa senkrecht zur Längsachse (134) des etwa kappenförmigen Elementes (64) verläuft.

37. Einsatz nach Anspruch 36, **dadurch gekennzeichnet, dass** die dem etwa kappenförmigen Element (64) zugewandte Oberfläche und/oder abgewandte Unterfläche der gewellt ausgebildeten durchtrittsicheren Einlage (132) durch eine korrespondierend ausgeformte Schicht oder Füllmasse, gegebenenfalls eines Teils der Sohle (112), ebenflächig ausgeformt ist.

38. Einsatz nach einem der Ansprüche 29 bis 37, **dadurch gekennzeichnet, dass** das etwa kappenförmige Element (64) und/oder die durchtrittsichere Einlage (132) aus AlMg_{4,5}Mn, AlMgSi_{0,5}, AlMgSi, AlMg₅, AlZn_{4,5}Mg, AlCuMg, AlCuMg₂, AlZnMgCu_{0,5}, AlZnMgCu_{1,5}, AlCuMgPb als Aluminium enthaltende Legierung besteht/bestehen.

39. Einsatz nach einem der Ansprüche 29 bis 38, **dadurch gekennzeichnet, dass** das etwa kappenförmige Element (64) und/oder die Bördelung (66) oder dergleichen Rand und/oder die durchtrittsichere Einlage (132) mit einem Überzug aus nicht-leitendem, stromisolierendem Material, insbesondere aus Hart-Cot, und/oder aus Kunststoff und/oder Farbe bzw. Lack beschichtet ist/sind.

## Claims

1. A method for the production of inserts (12) for safety shoes or protective shoes (14) from an unprofiled longitudinal section (16) of aluminum or an alloy containing aluminum having at least one plane surface (16'), wherein the unprofiled longitudinal section (16) is first of all at least partially acted upon by at least one roll (22', 22'', 36', 36'') provided at least in part with an outer profile (26, 26', 28, 28') in such a way that the processed surface (16') of the longitudinal section (16) is exposed to inherent compressive stresses and the zones of the longitudinal section (16) lying under the treated surface (16') are exposed to inherent tensile stresses in axial and tangential direction, the longitudinal section (16), which has been exposed to inherent compressive and tensile stresses, is then cut, formed without cutting and provided with a flange (66) or similar edge and the insert (12) is finally at least partially compressed.

2. A method in accordance with claim 1, **characterized in that** the longitudinal section (16) is acted upon by at least one roll (22', 22'', 36', 36'') at least partially provided with an outer profile (26, 26', 28, 28'), arranged substantially vertically or at an angle (β) to the longitudinal section (16) and capable of being rotated about its own longitudinal axis (32).

3. A method in accordance with claim 1 or claim 2, **characterized in that** the longitudinal section (16) is acted upon by at least two rolls (22', 22", 36', 36'') at least partially provided with an outer profile (26, 26', 28, 28') in sequence in the opposite direction.

4. A method in accordance with claim 2 or claim 3, **characterized in that** the longitudinal section (16) is acted upon by at least one roll (22', 22'') at least partially provided with an outer profile (26, 26', 28, 28') and is acted upon or supported, respectively, by at least one further roll (36', 36'') at least partially provided with an outer profile (26, 26', 28, 28') or by an unprofiled roll (36, 36''') or similar supporting means, which is arranged at a distance opposite to the at least one roll (22', 22'').

5. A method in accordance with claims 1 to 4, **characterized in that** the surface (16') to be treated of the longitudinal section (16) is worked by the at least one roll (22', 22'', 36', 36'') with an outer profile (26, 26', 28, 28') in the form of annular elevations (44) and recesses (46).

6. A method in accordance with claim 5, **characterized in that** the surface (16') to be treated of the longitudinal section (16) is worked by several rolls (22', 22'', 36', 36'') with an outer profile (26, 26', 28, 28') in the form of annular elevations (44) and recesses (46), the annular elevations (44) and recesses (46) of adjoining rolls (22', 22", 36', 36'') being different to each other with respect to their design and arrangement and/or the rolls (22', 22'', 36', 36'') respectively adjoining each other, which are driven in a different direction of rotation.

7. A method in accordance with claim 5 or claim 6, **characterized in that** the surface (16') to be treated of the longitudinal section (16) is worked by rolls (22'', 36'') with an outer profile (28, 28') in the form of annular elevations (44) and recesses (46) being arranged at an angle (α, α') to the longitudinal axes (32) of the rolls (22", 36''), the rolls (22'', 36'') being driven in the same direction of rotation when the elevations (44) and recesses (46) remain in substantially counterposed forward motion position or in the opposite direction of rotation when the elevations (44) and recesses (46) remain in substantially the same forward motion position.

8. A method in accordance with one of claims 5 to 7, **characterized in that** the surface (16') to be treated of the longitudinal section (16) is worked by rolls (22', 36') with an outer profile (22, 22') in the form of annular elevations (44) and recesses (46) being arranged vertically to their longitudinal axes (32), particularly axially displaced to each other.

9. A method in accordance with one of claims 1 to 8, **characterized in that** the longitudinal section (16) is cut to size by punching.

10. A method in accordance with claims 1 to 9, **characterized in that** the cut portion of the longitudinal section (16) is formed without cutting by (deep-)drawing to form a pot-like profile.

11. A method in accordance with one of claims 1 to 10, **characterized in that** the pot-like profile is separated into two cap-like elements (64) being arranged particularly mirror-symmetrically to each other.

12. A method in accordance with one of claims 1 to 11, **characterized in that** each of the two cap-like elements (64) particularly mirror-symmetrical to each other is provided with a flange (66) or similar edge and compressed by pressurization in a region adjacent to the flange (66) or similar edge.

13. A method in accordance with claim 11 or claim 12, **characterized in that** the separation of the pot-like profile and the bevelling as well as the compression of the two cap-like elements (64) particularly mirror-symmetrical to each other is carried out isochronously or in chronological order.

14. A method in accordance with one of claims 1 to 13, **characterized in that** the two cap-like elements (64) are adjusted together with the flange (66) or similar edge and/or compressed by pressurization.

15. A method in accordance with one of claims 1 to 14, **characterized in that** the two cap-like elements together with the flange or similar edge are brought to fine dimension to two inserts and are then plane-compressed, if necessary.

16. A device for the production of inserts (12) for safety shoes or protective shoes (14) from an unprofiled longitudinal section (16) of aluminium or an alloy containing aluminum having at least one plane surface (16') for carrying out the method according to one of the preceding claims, comprising a device (18) for producing internal stresses in the unprofiled longitudinal section (16) with at least one roll (22', 22'', 36', 36") arranged substantially vertically or at an angle (β) to the longitudinal direction (arrow 24) of the longitudinal section (16), which is at least partially provided with an outer profile (26, 26', 28, 28') acting upon the surface (16') of the longitudinal section (16) in the form of annular elevations (44) and recesses (46) arranged at an angle (α, α') or vertically to the longitudinal axis (32) of the at least one roll (36', 36''), a device (58) for cutting to size the longitudinal section (16), which has been exposed to internal compressive and tensile stresses, a device (60, 62) for forming a cap-like element (64) without cutting and for forming a flange (66) or similar edge at the cap-like element (64) as well as a device (86, 94) for compressing the insert (12).

17. A device in accordance with claim 16, **characterized in that** the device (18) for producing internal stresses comprises at least one further roll (36', 36'') provided at least partially with an outer profile (26, 26', 28, 28') or unprofiled roll (36, 36''') or similar supporting means (34) arranged in the opposite direction.

18. A device in accordance with claim 16 or claim 17, **characterized in that** an additional roll (22', 22", 36', 36'') provided at least partially with an outer profile (22', 28') is arranged subsequently in sequence in the opposite direction to the at least one roll (22', 22", 36', 36'') provided at least partially with an outer profile (26, 28) in the direction of motion of the longitudinal section (16) for acting upon the surface (16') of the longitudinal section (16).

19. A device in accordance with claim 18, **characterized in that** the two rolls (22'', 36") arranged subsequently to each other are provided with annular elevations (44) and recesses (46) being arranged at an angle (α, α') to their longitudinal axes (32), the two rolls (22'', 36") being moveable in the same direction of rotation, when the elevations (44) and recesses (46) remain in substantially counterposed forward motion position, or in the opposite direction of rotation, when the elevations (44) and recesses (46) remain in substantially the same forward motion position.

20. A device in accordance with claim 18 or claim 19, **characterized in that** the two rolls (22', 36') tandem-arranged to each other are provided with annular elevations (44) and recesses (46), which are arranged vertically to their longitudinal axes (32), the two rolls (22', 36') and/or the annular elevations (44) and recesses (46) being axially displaced to each other.

21. A device in accordance with one of claims 16 to 20, **characterized in that** a device (58) for cutting to size, particularly for punching the longitudinal section (16), which has been exposed to internal stresses, is tandem-arranged to the device (18) for the production of internal stresses.

22. A device in accordance with one of claims 16 to 21, **characterized in that** a device (60) for (deep-)drawing of the section of the longitudinal profile (16), which has been exposed to internal stresses and which has been cut to size, is provided.

23. A device in accordance with one of claims 16 to 22, **characterized in that** the device (62) for forming a cap-like element (64) without cutting and for forming a flange (66) or similar edge comprises a cutting device (78) for separating the pot-like profile into two cap-like elements (64) particularly mirror-symmetrical to each other.

24. A device in accordance with one of claims 16 to 23, **characterized in that** the device (62) for forming a cap-like element (64) without cutting and for forming a flange (66) or similar edge comprises a bevelling device (80) for forming a flange (66) or similar edge at each of the tow cap-like elements (64).

25. A device in accordance with one of claims 16 to 24, **characterized in that** the device (62) for shaping a cap-like element (64) without cutting and for forming a flange (66) or similar edge comprises a compression press (82) for compressing the two cap-like elements (64) in a region adjoining the flange (66) or similar edge.

26. A device in accordance with one of claims 23 to 25, **characterized in that** the cutting device (78) and/or the bevelling device (80) and/or the compression press (82) are formed integrally.

27. A device in accordance with one of claims 16 to 26, **characterized in that** the device (86) for compressing the insert (12) comprises a straightening and compression press (88) for aligning and redensifying the two cap-like elements (64) and the flange (66) or similar edge.

28. A device in accordance with one of claims 16 to 27, **characterized in that** the device (86) for compressing the insert (12) comprises a device (94) for fine measurement and plane compression of the two cap-like elements (64) and the flange (66) or similar edge.

29. Insert for safety shoes or protective shoes comprising a cap-like element (64) with an opening for receiving at least one part of a foot, in particular of toes, of a human being and a flange (66) or similar edge attached to the cap-like element (64) and being supported at or on the sole (112), respectively, of a safety shoe or a protective shoe (14), the flange (66) or similar edge being supported at or on the sole (112), respectively, of the safety shoe or protective shoe (14) extends opposite to the wall (114) of the cap-like element (64) in the transition area (116) between the cap-like element (64) and the flange (66) or similar edge at an angle of about 90°, the cap-like element (64) and the flange (66) or similar edge being supported at or on the sole (112), respectively, of the safety shoe or protective shoe (14) being formed of aluminum or an alloy containing aluminium, **characterized in that** their surfaces are exposed to internal compressive stresses and the zones lying under their surfaces are exposed to internal tensile stresses in axial and tangential direction.

30. Insert in accordance with claim 29, **characterized in that** the flange (66) or similar edge, being supported at or on the sole (112), respectively, of the safety shoe or protective shoe (14), is bent inwardly at an angle of about 90° opposite to the wall (114) of the cap-like element (64).

31. Insert in accordance with claim 29 or claim 30, **characterized in that** the transition area (116) is provided with a curvature, in particular a bended curvature, between the cap-like element (64) and the flange (66) or similar edge, which increases starting from one end (120; point A) of the flange (66) or similar edge on the one side (122) of the opening (110) of the cap-like element (64) up to the leading end (124; point S) of the cap-like element (64) and decreases starting from the leading end (124; point S) of the cap-like element (64) to the other end (126; point B) of the flange (66) or similar edge on the other side (128) of the opening (110) of the cap-like element (64) and vice versa.

32. Insert in accordance with claim 31, **characterized in that** the increase of the curvature, in particular bended curvature, is substantially continuous starting from the one end (120; point A) of the flange (66) or similar edge on the one side (122) of the opening (16) of the cap-like element (64) to the leading end (124; point S) of the cap-like element (64) and the decrease of the curvature, in particular bended curvature, starting from the leading end (124; point S) of the cap-like element (64) to the other end (126; point B) of the flange (66) or similar edge on the other side (128) of the opening (110) of the cap-like element (64), and vice versa.

33. Insert in accordance with one of claims 29 to 32, **characterized in that** the transition area (110) between the cap-like element (64) and the flange (66) or similar edge comprises a radius (R1 or R2, respectively), in particular a bending radius, which amounts to between about 0,1 mm and about 5 mm, particularly 1 mm, at the one end or the other end (120; point A, point B), respectively, of the cap-like element (64) and between about 1 mm and about 14 mm, particularly 2 mm, at the leading end (124; point S) of the cap-like element (64).

34. Insert in accordance with one of claims 29 to 33, **characterized in that** the edges (130) of at least the flange (66) or similar edge being supported at or on the sole (112), respectively, of the safety shoe or protective shoe (14) is compressed on the upper surface.

35. Insert in accordance with one of claims 29 to 34, **characterized in that** a wear-out-proof insole (132) of aluminum or an alloy containing aluminum is associated to the flange (66) or similar edge being supported at or on the sole (112), respectively, of the safety shoe or protective shoe (14), the surfaces of which being exposed to internal compressive stresses and the zones lying under their surfaces being exposed to internal tensile stresses in axial and tangential direction.

36. Insert in accordance with claim 35, **characterized in that** the wear-out-proof insole (132) is formed wavedly in such a way that the waviness extends vertically to the longitudinal axis (134) of the cap-like element (64).

37. Insert in accordance with claim 36, **characterized in that** the surface facing the cap-like element (64) and/or the bottom surface facing away from the cap-like element (64) of the wavedly formed wear-out-proof insole (132) is formed as a plane surface by a correspondingly formed layer or filler, if necessary of a part of the sole (112).

38. Insert in accordance with one of claims 29 to 37, **characterized in that** the cap-like element (64) and/or the wear-out-proof insole (132) is/are made of AlMg_{4,5}Mn, AlMgSi_{0,5}, AlMgSi, AlMg₅, AlZn_{4,5}Mg, AlCuMg, AlCuMg₂, AlZnMgCu_{0,5}, AlZnMgCu_{1,5}, AlCuMgPb as an alloy containing aluminum.

39. Insert in accordance with one of claims 29 to 38, **characterized in that** the cap-like element (64) and/or the flange (66) or similar edge and/or the wear-out-proof insole (132) is/are coated with a cover layer of non-conducting, current-isolating material, in particular of hard cot and/or of plastics and/or colour or lacquer, respectively.

## Revendications

1. Procédé pour la fabrication d'inserts (12) pour chaussures de sécurité ou chaussures de protection (14) d'un profilé longitudinal (16) non profilé en aluminium ou un alliage contenant de l'aluminium comportant au moins une surface plane (16'), sur laquel on applique le profilé longitudinal (16) non profilé tout d'abord par au moins partiellement un rouleau (22', 22'', 36', 36'') pourvu au moins en partie d'un profilé extérieur (26, 26', 28, 28') de manière que la surface (16') traitée du profilé longitudinal (16) soit soumise aux tensions propres de pression et que les zones du profilé longitudinal (16) se trouvant sous la surface (16') traitée soient soumises aux tensions propres de traction dans la direction axiale et tangentielle, puis le profilé longitudinal (16), qui était soumis aux tensions propres de pression et de traction, est coupé à dimension, celui est formé sans enlèvement de copeaux et celui est pourvu avec un collet (66) ou bord similaire et l'insert (12) est finalement au moins partiellement comprimé.

2. Procédé selon la revendication 1, **caractérisé en ce qu'**on applique au profilé longitudinal (16) au moins un rouleau (22', 22'', 36', 36'') pourvu au moins partiellement d'un profilé extérieur (26, 26', 28, 28'), arrangé essentiellement en direction verticale ou dans un angle (β) par rapport au profilé longitudinal (16) et rotatif sur son axe longitudinal (32).

3. Procédé selon la revendication 1 ou 2, **caractérisé en ce qu'**on applique au profilé longitudinal (16) au moins deux rouleaux (22', 22'', 36', 36'') pourvu au moins partiellement d'un profilé extérieur (26, 26', 28, 28') successivement en sens inverse.

4. Procédé selon la revendication 2 ou 3, **caractérisé en ce qu'**on applique au profilé longitudinal (16) au moins un rouleau (22', 22'') pourvu au moins partiellement d'un profilé extérieur (26, 26', 28, 28') et qu'on applique au profilé longitudinal (16) ou supports le profilé longitudinal (16) avec au moins un autre rouleau (36', 36'') pourvu au moins partiellement d'un profilé extérieur (26, 26', 28, 28') ou d'un rouleau (36, 36''') non profilé ou support similaire, arrangé à une distance au moins le rouleau (22', 22'').

5. Procédé selon une des revendications 1 à 4, **caractérisé en ce que** la surface (16') qui doit être traitée du profilé longitudinal (16) est traitée par au moins le rouleau (22', 22'', 36', 36'') avec un profilé extérieur (26, 26', 28, 28') en forme des bourrelets (44) annulaires et des évidements (46).

6. Procédé selon la revendication 5, **caractérisé en ce que** la surface (16') qui doit être traitée du profilé longitudinal (16) est traitée par plusieurs rouleaux (22', 22'', 36', 36'') avec un profilé extérieur (26, 26', 28, 28') en forme des bourrelets (44) annulaires et des évidements (46), les bourrelets (44) annulaires et les évidements (46) des rouleaux (22', 22", 36', 36'') voisines étant différents l'un de l'autre en vue de leur formation et leur arrangement et/ou chaque rouleau des rouleaux (22', 22'', 36', 36'') voisines étant actionné en directions de rotation différentes.

7. Procédé selon la revendication 5 ou 6, **caractérisé en ce que** la surface (16') qui doit être traitée du profilé longitudinal (16) est traitée par des rouleaux (22'', 36'') avec un profilé extérieur (28, 28') en forme des bourrelets (44) annulaires et des évidements (46) étant arrangés dans un angle (α, α') par rapport aux axes (32) longitudinales des rouleaux (22'', 36''), les rouleaux (22'', 36'') étant actionnés dans la même direction de rotation, quand les bourrelets (44) et les évidements (46) restent dans une position avancée essentiellement opposée l'un par rapport à l'autre ou en direction de rotation inverse, quand les bourrelets (44) et les évidements (46) restent essentiellement dans la même position avancée.

8. Procédé selon une des revendications 5 à 7, **caractérisé en ce que** la surface (16') qui doit être traitée du profilé longitudinal (16) est traitée par des rouleaux (22', 36') avec un profilé extérieur (22, 22') en forme des bourrelets (44) annulaires et des évidements (46) arrangés en direction verticale par rapport aux axes longitudinales (32), particulièrement déplacés en direction axiale l'un par rapport à l'autre.

9. Procédé selon une des revendications 1 à 8, **caractérisé en ce que** le profilé longitudinal (16) est coupé à dimension par matriçage.

10. Procédé selon une des revendications 1 à 9, **caractérisé en ce que** la section coupée à dimension du profilé longitudinal (16) est formée sans enlèvement par emboutissage profond pour former un profilé en forme d'un pot.

11. Procédé selon une des revendications 1 à 10, **caractérisé en ce que** le profilé en forme d'un pot est séparé en deux éléments (64) en forme d'un chapeau qui sont arrangés particulièrement miroir symétriquement l'un par rapport à l'autre.

12. Procédé selon une des revendications 1 à 11, **caractérisé en ce que** chaque des deux éléments (64) en forme d'un chapeau, qui sont arrangés particulièrement miroir symétriquement l'un par rapport à l'autre, est pourvu avec un collet (66) ou bord similaire et comprimé par pressurisation dans un région voisin au collet (66) ou bord similaire.

13. Procédé selon la revendication 11 ou 12, **caractérisé en ce que** la séparation du profilé en forme d'un pot, et la biseautage ainsi que la compression des éléments (64) en forme d'un chapeau étant particulièrement arrangés miroir symétriquement l'un par rapport à l'autre est effectuée en même temps ou en ordre chronologique.

14. Procédé selon une des revendications 1 à 13, **caractérisé en ce que** les deux éléments (64) en forme d'un chapeau sont ajustés avec le collet (66) ou bord similaire et/ou comprimés par pressurisation.

15. Procédé selon une des revendications 1 à 14, **caractérisé en ce que** les deux éléments en forme d'un chapeau ainsi que le collet ou bord similaire sont portés à dimension de précision par rapport aux deux inserts et puis comprimés en plane, si nécessaire.

16. Dispositif pour la fabrication d'inserts (12) pour chaussures de sécurité ou chaussures de protection (14) d'un profilé longitudinal (16) non profilé en aluminium ou un alliage contenant de l'aluminium comportant au moins une surface plane (16') pour mettre en oeuvre le procédé selon une des revendications précédentes, comprenant une dispositif (18) pour produire des tensions propres dans le profilé longitudinal (16) non profilé avec au moins un rouleau (22', 22'', 36', 36'') arrangé essentiellement en direction verticale ou dans un an angle (β) par rapport au direction longitudinale (flèche 24) du profilé longitudinal section (16), pourvu au moins partiellement avec un profilé extérieur (26, 26', 28, 28') appliquant sur la surface (16') du profilé longitudinal (16) en forme des bourrelets (44) annulaires et évidements (46) arrangés dans un angle (α, α') ou en direction verticale par rapport à l'axe longitudinal (32) au moins d'un rouleau (36', 36"), un dispositif (58) pour couper en dimension le profilé longitudinal (16), qui était soumis aux tensions propres de pression et de traction, un dispositif (60, 62) pour former un élément (64) en forme d'un chapeau sans enlèvement et pour former un collet (66) ou bord similaire à l'élément (64) en forme d'un chapeau ainsi que un dispositif (86, 94) pour comprimer l'insert (12).

17. Dispositif selon la revendication 16, **caractérisé en ce que** le dispositif (18) pour produire des tensions propres comprend au moins un autre rouleau (36', 36'') pourvu au moins partiellement avec un profilé extérieur (26, 26', 28, 28') ou rouleau (36, 36''') non profilé ou support similaire (34) arrangé en sens inverse.

18. Dispositif selon la revendication 16 ou 17, **caractérisé en ce que** un rouleau additionnel (22', 22'', 36', 36'') pourvu au moins partiellement avec un profilé extérieur (22', 28') est arrangé à la suite en sens inverse par rapport au moins le rouleau (22', 22'', 36', 36'') pourvu au moins partiellement avec un profilé extérieur (26, 28) à la direction de mouvement du profilé longitudinal (16) pour appliquer à la surface (16') du profilé longitudinal (16).

19. Dispositif selon la revendication 18, **caractérisé en ce que** les deux rouleaux (22'', 36'') arrangés à la suite l'un à l'autre sont pourvu avec des bourrelets (44) annulaires et des évidements (46) dans un angle (α, α') par rapport aux axes longitudinaux (32), les deux rouleaux (22'', 36'') étant susceptibles d'être tourné à la même direction de rotation si les bourrelets (44) et les évidements (64) présentent une position de marche en avant essentiellement opposée, ou les deux rouleaux (22'', 36'') étant susceptibles d'être tourné à la même direction si les bourrelets (44) et les évidements (64) présentent une position de marche en avant essentiellement égale.

20. Dispositif selon la revendication 18 ou 19, **caractérisé en ce que** les deux rouleaux (22', 36') étant arrangés à la suite l'un à l'autre sont pourvus avec des bourrelets (44) annulaires et des évidements (46), qui sont arrangés à direction vertical par rapport à leurs axes longitudinaux (32), les deux rouleaux (22', 36') et/ou les bourrelets (44) annulaires et les évidements (46) étant déplacés l'un à l'autre en direction axiale.

21. Dispositif selon une des revendications 16 à 20, **caractérisé en ce que** un dispositif (58) pour couper à dimension, particulièrement pour poinçonner le profilé longitudinal (16), qui était soumis aux tensions propres, est arrangé à la suite le dispositif (18) pour produire des tensions propres.

22. Dispositif selon une des revendications 16 à 21, **caractérisé en ce que** un dispositif (60) pour emboutissage profond de la section du profilé longitudinal (16), soumis aux tensions propres et coupé à dimension, est pourvu.

23. Dispositif selon une des revendications 16 à 22, **caractérisé en ce que** le dispositif (62) pour former un élément (64) en forme d'un chapeau sans enlèvement et pour former un collet (66) ou bord similaire comprend un dispositif coupeur (78) pour séparer le profilé en forme d'un pot dans deux éléments (64) en forme d'un chapeau, qui sont particulièrement miroir symétrique l'un à l'autre.

24. Dispositif selon une des revendications 16 à 23, **caractérisé en ce que** le dispositif (62) pour former un élément (64) en forme d'un chapeau sans enlèvement et pour former un collet (66) ou bord similaire comprend un dispositif à chanfreiner (80) pour former un collet (66) ou bord similaire à chaque des deux éléments (64) en forme d'un chapeau.

25. Dispositif selon une des revendications 16 à 24, **caractérisé en ce que** le dispositif (62) pour former un élément (64) en forme d'un chapeau sans enlèvement et pour former un collet (66) ou bord similaire comprend une presse de compression (82) pour compresser les deux éléments (64) en forme d'un chapeau dans un région voisin au collet (66) ou bord similaire.

26. Dispositif selon une des revendications 23 à 25, **caractérisé en ce que** le dispositif coupeur (78) et/ou le dispositif à chanfreiner (80) et/ou la presse de compression (82) sont formés intégralement.

27. Dispositif selon une des revendications 16 à 26, **caractérisé en ce que** le dispositif (86) pour compresser l'insert (12) comprend une presse à dresser et compresser (88) pour aligner et densifier les deux éléments (64) en forme d'un chapeau et le collet (66) ou bord similaire.

28. Dispositif selon une des revendications 16 à 27, **caractérisé en ce que** le dispositif (86) pour compresser l'insert (12) comprend un dispositif (94) pour cotage précis et pour compression surfacique des deux éléments (64) en forme d'un chapeau et le collet (66) ou bord similaire.

29. Insert pour chaussures de sécurité ou chaussures de protection comprenant un élément (64) en forme d'un chapeau avec un ouverture pour recevoir au moins une part du pied, en particulier des doigts de pied d'un homme et un collet (66) ou bord similaire, qui est associé à l'élément (64) en forme d'un chapeau et qui est supporté à ou bien sur la semelle (112) d'une chaussure de sécurité ou d'une chaussure de protection (14), le collet (66) ou bord similaire étant supporté à ou bien sur la semelle (112) de la chaussure de sécurité ou de la chaussure de protection (14) s'étends en face de la paroi (114) d'élément (64) en forme d'un chapeau dans la région de transition (116) entre l'élément (64) en forme d'un chapeau et le collet (66) ou bord similaire dans un angle d'environ 90°, l'élément (64) en forme d'un chapeau et le collet (66) ou bord similaire étant supporté à ou bien sur la semelle (112) de la chaussure de sécurité ou de la chaussure de protection (14) formée en aluminium ou un alliage contentant de l'aluminium, **caractérisé en ce que** leurs surfaces sont soumises aux tensions propres de pression et les zones se trouvant sous la surface traitée sont soumises aux tensions propres de traction dans une direction axiale et tangentielle.

30. Insert selon la revendication 29, **caractérisé en ce que** le collet (66) ou bord similaire, supporté à ou bien sur la semelle (112) de la chaussure de sécurité ou de la chaussure de protection (14), est replié vers l'intérieur dans un angle d'environ 90° en face de la paroi (114) de l'élément (64) en forme d'un chapeau.

31. Insert selon la revendication 29 ou 30, **caractérisé en ce que** la région de transition (116) est pourvue avec une courbure, en particulier une courbure de flexion entre l'élément (64) en forme d'un chapeau et le collet (66) ou bord similaire, qui grandis à partir d'une extrémité (120; point A) du collet (66) ou bord similaire sur une côté (122) de l'ouverture (110) de l'élément (64) en forme d'un chapeau jusqu'au l'extrémité antérieur (124; point S) de l'élément (64) en forme d'un chapeau et diminues à partir de l'extrémité antérieur (124; point S) de l'élément (64) en forme d'un chapeau jusqu'au l'autre extrémité (126; point B) du collet (66) ou bord similaire à l'autre côté (128) de l'ouverture (110) de l'élément (64) en forme d'un chapeau, et vice versa.

32. Insert selon la revendication 31, **caractérisé en ce que** l'augmentation de la courbure, en particulier la courbure de flexion, est essentiellement continue à partir d'une extrémité (120; point A) du collet (66) ou bord similaire au côté (122) de l'ouverture (16) de l'élément (64) en forme d'un chapeau jusqu'au l'extrémité antérieur (124; point S) de l'élément (64) en forme d'un chapeau et la diminution de la courbure, en particulier la courbure de flexion, à partir de l'extrémité antérieur (124; point S) de l'élément (64) en forme d'un chapeau jusqu'au l'autre extrémité (126; point B) du collet (66) ou bord similaire à l'autre côté (128) de l'ouverture (110) de l'élément (64) en forme d'un chapeau, et vice versa.

33. Insert selon une des revendications 29 à 32, **caractérisé en ce que** la région de transition (110) entre l'élément (64) en forme d'un chapeau et le collet (66) ou bord similaire comprend un radius (R1 ou bien R2), en particulier un rayon de courbure, qui est entre à peu près 0,1 mm et à peu près 5 mm, particulièrement 1 mm, à une extrémité ou l'autre extrémité (120; point A, point B) de l'élément (64) en forme d'un chapeau et entre à peu près 1 mm et à peu près 14 mm, particulièrement 2 mm, à l'extrémité antérieur (124; point S) de l'élément (64) en forme d'un chapeau.

34. Insert selon une des revendications 29 à 33, **caractérisé en ce que** les bords (130) au moins du collet (66) ou bord similaire, qui est supporté à ou bien sur la semelle (112) de la chaussure de sécurité ou de la chaussure de protection (14), est comprimé sur la côté de la surface.

35. Insert selon une des revendications 29 à 34, **caractérisé en ce que** une support (132) résistant à l'usure en aluminium ou un alliage contenant aluminium est associée avec le collet (66) ou bord similaire étant supporté à ou bien sur la semelle (112) de la chaussure de sécurité ou de la chaussure de protection (14), la surface de celui-ci étant soumise aux tensions propres de compression et les zones se trouvant sous les surfaces étant soumises aux tensions propres de traction en direction axial et tangentielle.

36. Insert selon la revendication 35, **caractérisé en ce que** le support (132) résistant à l'usure est formé ondulé de cette façon que l'ondulation se projets en direction verticale par rapport à l'axe longitudinal (134) de l'élément (64) en forme d'un chapeau.

37. Insert selon la revendication 36, **caractérisé en ce que** la surface qui oppose l'élément (64) en forme d'un chapeau et/ou la surface inférieure qui oppose l'élément (64) en forme d'un chapeau du support (132) résistant à l'usure, qui est formé ondulé, est formé comme une surface plane par une couche ou matière de remplissage, si nécessaire d'un part de la semelle (112).

38. Insert selon une des revendications 29 à 37, **caractérisé en ce que** l'élément (64) en forme d'un chapeau et/ou la surface (132) résistant à l'usure se compose/nt de AlMg_{4,5}Mn, AlMgSi_{0,5}, AlMgSi, AlMg₅, AlZn_{4,5}Mg, AlCuMg, AlCuMg₂, AlZnMgCu_{0,5}, AlZnMgCu_{1,5}, AlCuMgPb comme un alliage contenant de l'aluminium.

39. Insert selon une des revendications 29 à 38, **caractérisé en ce que** l'élément (64) et/ou le collet (66) ou bord similaire et/ou la surface (132) résistant à l'usure est/sont couvri/s avec une couche de matière non conductrice isolante contre courant, en particulier de cot dur et/ou de plastique et/ou de couleur ou laque.
